Europäisches Patentamt

European Patent Office

Office européen des brevets

(19)

(11) **EP 1 146 984 B1**

(12) # EUROPÄISCHE PATENTSCHRIFT

(45) Veröffentlichungstag und Bekanntmachung des Hinweises auf die Patenterteilung:
**02.10.2002 Patentblatt 2002/40**

(51) Int Cl.[7]: **B23H 3/02**

(21) Anmeldenummer: **99968322.0**

(22) Anmeldetag: **27.12.1999**

(86) Internationale Anmeldenummer:
**PCT/DE99/04122**

(87) Internationale Veröffentlichungsnummer:
**WO 00/040362 (13.07.2000 Gazette 2000/28)**

(54) **VERFAHREN UND VORRICHTUNG ZUR ELEKTROCHEMISCHEN MATERIALBEARBEITUNG**

METHOD AND APPARATUS FOR ELECTROCHEMICALLY PROCESSING MATERIAL

PROCEDE ET DISPOSITIF POUR L'USINAGE ELECTROCHIMIQUE DE MATERIAUX

(84) Benannte Vertragsstaaten:
**AT BE CH CY DE DK ES FI FR GB GR IE IT LI LU MC NL PT SE**

(30) Priorität: **05.01.1999 DE 19900173**

(43) Veröffentlichungstag der Anmeldung:
**24.10.2001 Patentblatt 2001/43**

(73) Patentinhaber: **Max-Planck-Gesellschaft zur Förderung der Wissenschaften e.V.
80539 München (DE)**

(72) Erfinder:
- **SCHUSTER, Rolf
  D-14193 Berlin (DE)**
- **KIRCHNER, Viola
  D-14163 Berlin (DE)**

(74) Vertreter: **König, Beate, Dipl.-Phys. Dr.
König & Köster,
Morassistrasse 8
80469 München (DE)**

(56) Entgegenhaltungen:
**EP-A- 0 422 248     WO-A-97/03781
US-A- 4 097 710**

**Beschreibung**

Die Erfindung betrifft ein Verfahren und eine Vorrichtung zur elektrochemischen Bearbeitung eines Werkstückes mittels einer pulsierenden oder alternierenden elektrischen Spannung, gemäß dem Oberbegriff des Anspruchs 1 bzw. des Anspruchs 14. Besonderes Anwendungsgebiet der Erfindung ist die Abtragung oder die Abscheidung von Material an einer Werkstückoberfläche zur Schaffung feiner Strukturen im Mikrometer- und Submikrometerbereich.

Mit mechanisch spanabhebenden Methoden wie Drehen, Bohren und Fräsen sind unter Verwendung geeigneter Werkzeuge wie z.B. Diamantdrehmeißeln Strukturen im μm-Bereich erzeugbar. Bei harten Legierungen und Sintermetallen, die der spanabhebenden Verformung nicht zugänglich sind, lassen sich Maßhaltigkeiten von einigen μm durch Funkenerosion und Laserbearbeitung erzielen.

Die Schaffung kleinster Strukturen von einigen nm Größe und Maßhaltigkeit gelingt mit fotolithografischen Techniken, die bevorzugt zur Herstellung von Halbleiterchips und auch zum Bilden von Kunststoff- und Siliciumformen für Mikrozahnräder und -motoren angewandt werden. Allerdings sind die entsprechenden Strukturen, die durch anisotropes Ätzen gewonnen werden, immer an die kristallografischen Richtungen des Substrates gebunden.

Elektrochemische Methoden zur Materialbearbeitung sind in verschiedenen Ausgestaltungen bekannt, werden aber aufgrund ihrer beschränkten Präzision bisher nur in geringem Umfang eingesetzt. Bei konventionellen Methoden wird eine Gleichspannung zwischen zwei in einen Elektrolyten eintauchende Elektroden gelegt, deren eine das Werkstück und deren andere das Werkzeug bildet. Hierbei wird die lokale Stromdichte und somit auch die Abtragungs- bzw. Abscheidungsrate nur wenig von der Geometrie der Elektroden beeinflußt. Daher erfaßt die elektrochemische Reaktion immer auch Elektrodenbereiche, die weit von der eigentlich zu bearbeitenden Stelle entfernt sind. Dies setzt Grenzen für die erzielbare Feinheit oder räumliche Auflösung der hergestellten Struktur.

Beim herkömmlichen elektrochemischen Senken wird die Kathode in das Werkstück eingesenkt, wobei sich je nach Vorschubgeschwindigkeit und Stromstärke ein Arbeitsspalt von 0,05 bis 2 mm ausbildet. Die erreichbare Präzision ist hier durch die Stromdichte bestimmt und daher relativ gering; der kleinste erreichbare Kantenradius beträgt ca. 0,1 mm. Gleiches gilt auch für das bekannte elektrochemische Drehen/Bohren mit Hilfe einer mit Elektrolyt gefüllten Kapillare, die anstelle einer an das Werkstück herangeführten Elektrode verwendet wird, um den Reaktionsstrom lokal an die zu bearbeitende Stelle zu leiten.

Ein als "Scanning Electrochemical Microscopy" bezeichnetes elektrochemisches Bearbeitungsverfahren, das die Schaffung kleinster zweidimensionaler Strukturen von wenigen 100 nm Größe ermöglichen soll, wurde von A.J. Bard u.a. vorgestellt (vgl. Electroanal.Chem. 18 (1994)). Hierbei wird eine seitlich isolierte Ultramikroelektrode sehr knapp über die zu modifizierende Oberfläche geführt. Bevorzugt durch Anlegen einer Gleichspannung werden an der Mikroelektrode Reagenzien erzeugt, die zur Oberfläche des Werkstückes diffundieren und diese modifizieren. Die minimale Strukturgröße ist durch die Diffusionslänge der Reaktanden bestimmt.

Eine elektrochemische Materialbearbeitung, die mittels sehr kurzer Spannungspulse Strukturen im nm-Bereich schafft, wurde von R.Schuster u.a. in Phys.Rev.Lett. 80, 5599-5602 (1998) beschrieben. Bei den dort berichteten Versuchen wurden kurze Spannungspulse mit einer Dauer $\leq 100$ ns und einer Amplitude bis zu 4 V zwischen Spitze und Probe eines elektrochemischen Rastertunnelmikroskops gelegt. Hierdurch ließen sich Löcher von ca. 5-10 nm Durchmesser und ca. 3 Monolagen Tiefe auf einer Goldoberfläche erzeugen. Auch der umgekehrte Prozeß, die Abscheidung von Cu-Clustern durch Reduktion von Ionen aus dem Elektrolyten war möglich. In diesen Experimenten wurde darauf geachtet, daß sich der vorderste Teil der Spitze extrem nahe an der Oberfläche befand, in einer Entfernung von nur 1 nm. Aufgrund eines derart kleinen Abstandes werden bereits während der ersten $10^{-10}$ Sekunden des Spannungspulses große Bereiche der elektrochemischen Doppelschicht an der Spitze aufgeladen. Daß die erzeugten Strukturen dennoch kleiner sind als diese Bereiche, erklärt sich daraus, daß bei der Umladung der Doppelschicht praktisch alle Ionen im extrem engen Zwischenraum verbraucht werden. Dies führt zur fast kompletten Verarmung des Elektrolyten in dem schmalen, sich über mehrere 100 $nm^2$ erstreckenden Spalt zwischen Spitze und Probe. Für eine Nachfüllung des Elektrolyten in den Spalt durch laterale Diffusion aus dem angrenzenden Elektrolytvolumen reicht die kurze Pulsdauer nicht aus. Der Elektrolytwiderstand im Spalt wird daher unendlich groß; die Elektrodenflächen sind voneinander "isoliert". Nur am vordersten Ende der Spitze, dort wo sich zwischen Spitze und Probe nur noch ca. 3 Lösungsmittelmoleküle befinden, berühren sich die Doppelschichten praktisch ohne dazwischenliegenden Elektrolyten, und nur dort kann eine materialbeeinflussende Reaktion stattfinden.

Bei der vorstehend beschriebenen Methode beruht die Ortsauflösung also auf der lokalen Verarmung des Elektrolyten innerhalb eines Spaltes, der einerseits extrem eng (1 nm!) sein muß, andererseits bei dieser Enge aber eine gewisse Mindest-Flächenausdehnung haben muß. Es bringt technische Probleme, dies bei industrieller Anwendung zu realisieren.

Alle oben behandelten elektrochemischen Bearbeitungsverfahren, sofern sie sich zur Schaffung sehr kleiner Strukturen eignen, können die gebildeten Strukturen nur zweidimensional definieren. Eine reproduzierbare Auflösung in drei Dimensionen, also gute relative Maßhaltigkeit auch in Tiefenrichtung, ist mit den bisher bekannten elektrochemischen Verfahren allenfalls bei "großen" Strukturen im Bereich einiger zehn μm zu erzielen.

Aufgabe der vorliegenden Erfindung ist es, technische Maßnahmen zur elektrochemischen Materialbearbeitung anzugeben, die sich zur Bildung auch kleinster Strukturen bis in den Submikrometerbereich eignen und mit denen eine gute Maßhaltigkeit in allen drei räumlichen Dimensionen erzielbar ist. Diese Aufgabe wird erfindungsgemäß gelöst durch das im Anspruch 1 gekennzeichnete Verfahren und die im Anspruch 14 gekennzeichnete Vorrichtung. Besondere Ausführungsformen der Erfindung sind in Unteransprüchen gekennzeichnet.

Bei der erfindungsgemäßen Technik beruht demnach die auflösungsbestimmende Ortsselektion der Bearbeitung auf lokaler Begrenzung der Umladung der elektrochemischen Doppelschicht. Dies ist ein prinzipieller Unterschied zu der aus der oben erwähnten Veröffentlichung bekannten Technik, bei welcher die Ortsauflösung nur auf Verarmung des Elektrolyten und der zu langsamen lateralen Diffusion von Ionen in dem sehr schmalen Zwischenraum zwischen Spitze (Werkzeugelektrode) und Probe (Werkstück) beruht.

Die lokale Begrenzung der Doppelschichtumladung erfolgt erfindungsgemäß durch bestimmte Dimensionierung des Mittelwertes einer angelegten pulsierenden oder alternierenden elektrischen Spannung und der relativ zu diesem Mittelwert gemessenen Spannungsausschläge hinsichtlich ihrer Dauer und Höhe, um einen Entfernungsbereich zu definieren, innerhalb dessen eine zur Herbeiführung der gewünschten elektrochemischen Reaktion ausreichende Doppelschichtumladung am Werkstück erfolgt, während weiter entfernt liegende Werkstückbereiche keine genügende Doppelschichtumladung erfahren. Die Geometrie des Zwischenraumes zwischen Werkstück und Werkzeugelektrode wird so bemessen, daß nur Punkte der zu bearbeitenden Zone des Werkstückes innerhalb des besagten Entfernungsbereiches liegen.

Die angelegte Spannung kann aus beliebig geformten Pulsen über einem Ruhepegel bestehen oder eine Wechselspannung alternierender Polarität mit oder ohne Gleichstromkomponente sein, wobei die Wellenform der Wechselkomponente auch sinusartig sein kann. Vorzugsweise ist ein periodischer Spannungsverlauf zu wählen.

Physikalische Grundlagen der Erfindung, besondere Vorteile und Realisierungsbeispiele werden nachstehend anhand der beigefügten Zeichnungen näher erläutert.

Fig. 1      ist ein Ersatzschaltbild des Raumes zwischen zwei Elektroden in einem Elektrolyten;

Fig. 2      zeigt Spannungs- und Stromverläufe zur Erläuterung des Prinzips der Erfindung;

Fig. 3      skizziert die stationäre Strom/Spannungskurve im Falle einer Cu-Werkstückelektrode und einer Au-Werkzeugelektrode in einem Elektrolyten, der 1 M KCl und 0,1 M $H_2SO_4$ enthält;

Fig. 4      zeigt elektronenmikroskopische Aufnahmen der Spitze eines Kupferdrahts vor dem Ätzen (a) und nach dem Ätzen mit 50 ns breiten Pulsen (b) und mit 10 µs breiten Pulsen (c) in einem Elektrolyten, der 1 M KCl und 0,1 M $H_2SO_4$ enthält;

Fig. 5      zeigt elektronenmikroskopische Aufnahmen der Spitze eines Kupferdrahts vor dem Ätzen (a) und nach dem Ätzen (b) mit 50 ns breiten Pulsen in einem Elektrolyten, der 0,1 M KCl und 0,01 M $H_2SO_4$ enthält;

Fig. 6      ist eine schematische Darstellung eines Regelkreises, der bei Durchführung erfindungsgemäßer Verfahren angewandt werden kann;

Fig. 7      ist eine schematische Darstellung eines bipotentiostatischen Regelungssystems für den mittleren Wert der Bearbeitungsspannung;

Fig. 8      zeigt mikroskopische Aufnahmen der Ergebnisse des Ätzens von Vertiefungen in einen Kupferfilm mit unterschiedlich breiten Pulsen und unterschiedlichen Ätzdauern in einem Elektrolyten der $HClO_4$ und $CuSO_4$ im Verhältnis 2:1 enthält, bei verschiedenen Elektrolytkonzentrationen von 0,1 M (a) und 0,03 M (b) und Anwendung des bipotentiostatischen Regelungssystems nach Fig. 7;

Fig. 9      zeigt in einem Diagramm die erzielte räumliche Auflösung bei den Ätzbehandlungen nach Fig. 8;

Fig. 10      zeigt eine Anordnung von Werkstück und Werkzeugelektrode zur Simulation der Ätzrate;

Fig. 11      ist ein Diagramm der simulierten Ätzrate an der Anordnung nach Fig. 10;

Fig. 12      zeigt elektronenmikroskopische Aufnahmen der Ergebnisse des Ätzens von Vertiefungen in ein Kupferblech mit unterschiedlich breiten Pulsen in einem Elektrolyten, der 0,1 M $HClO_4$ und 0,05 M $CuSO_4$ enthält, unter Anwendung des bipotentiostatischen Regelungssystems nach Fig. 7;

Fig. 13      zeigt in einer elektronenmikroskropischen Aufnahme das Ergebnis des Ätzens einer Vertiefung in p-Silicium(111) mit 400 ns breiten Pulsen in einem Elektrolyten, der 1% HF in $H_2O$/ $CH_3OH$ (50:50) enthält, unter Anwendung des bipotentiostatischen Regelungssystems nach Fig. 7;

Fig. 14      zeigt in einer elektronenmikroskopischen Aufnahme Ergebnisse des Abscheidens von Kupfer aus einem Elektrolyten, der 0,1 M $CuSO_4$ und 0,01 M $HClO_4$ enthält, auf ein Goldsubstrat, unter Verwendung von 400 ns breiten Pulsen und Anwendung des bipotentiostatischen Regelungssystems nach Fig. 7;

Figuren 15, 16, und 17     zeigen einige Beispiele für Elektrodengeometrien zur Durchführung erfindungsgemäßer Verfahren.

Die Erfindung nutzt in neuartiger Weise die kapazitive Eigenschaft der elektrochemischen Doppelschicht, die beim Eintauchen eines festen Körpers wie etwa einer Elektrode in einen Elektrolyten an der Grenzfläche zwischen Körper und Elektrolyt entsteht. Diese Doppelschicht ist eine durch Ladungsverschiebungen hervorgerufene Zone mit einer Dicke von nur einigen Atom- oder Molekülschichten und verhält sich wie ein Plattenkondensator mit extrem kleinem Plattenabstand. Die elektrische Kapazität der Doppelschicht pro Flächeneinheit ist dementsprechend hoch, bei gebräuchlichen Elektrolyten und metallischen Elektrodenmaterialien liegt sie in der Größenordnung von $10 \, \mu F/cm^2$.

Eine elektrochemische Reaktion wie z.B. die Oxidation einer Metallelektrode läuft nur dann merklich ab, wenn die Potentialdifferenz an der Doppelschicht vor dieser Elektrode, also die über diese Doppelschicht abfallende Spannung, groß genug ist, also einen bestimmten Schwellenwert $U_{reak}$ überschreitet. Da sich die Doppelschicht wie ein Kondensator verhält, kann beim Anlegen einer äußeren Spannung die Reaktion erst beginnen, nachdem sich die besagte Potentialdifferenz durch entsprechend starke Aufladung der Doppelschicht aufgebaut hat. Dasselbe gilt auch für die an der Gegenelektrode stattfindende Gegenreaktion (z.B. die Reduktion von $H^+$). Auch hier muß die entsprechende Potentialdifferenz $U_{gegenreak}$ durch Umladen der Doppelschicht überschritten werden, damit der Gegenreaktionsstrom fließen kann. Dabei fließt der Ladestrom als Ionenstrom über den Elektrolyten. Die Zeitkonstante $\tau$ dieses Ladevorgangs ist das Produkt der Gesamtkapazität C der Doppelschichten und des ohmschen Widerstandes R des Strompfades über den Elektrolyten.

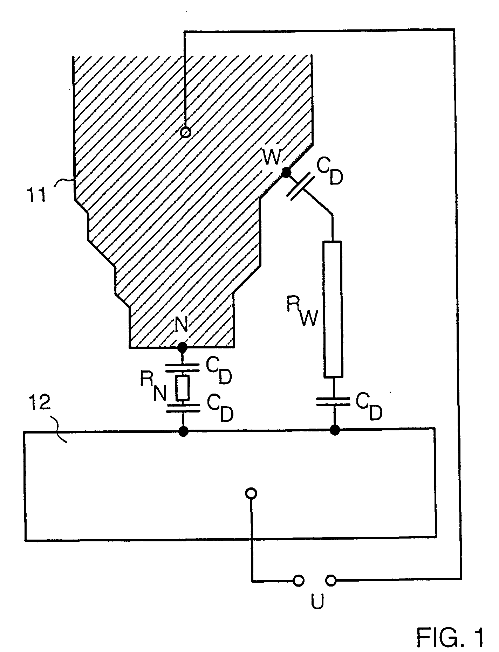

Ist der Abstand zwischen den beiden Elektroden, an welche die äußere Spannung gelegt wird, örtlich verschieden, dann ergeben sich für verschiedene Bereiche der Elektroden unterschiedliche Zeitkonstanten. Dies sei veranschaulicht anhand der Fig. 1, die das Ersatzschaltbild einer Anordnung zweier Elektroden 11 und 12 mit unregelmäßigem Zwischenraum zeigt. An Ortsbereichen W, wo der Elektrodenabstand groß (weit) ist, ist wegen der dickeren Elektrolytschicht der ohmsche Widerstand $R_W$ des Strompfades größer als der Widerstand $R_N$, der für Ortsbereiche N kleinen (nahen) Abstandes (an der Spitze der Elektrode 11) gilt. Bei einer Änderung der angelegten Spannung U werden daher die Doppelschichtkapazitäten $C_D$ an Orten W großen Abstandes langsamer aufgeladen als an Orten N kleinen Abstandes. Eventuelle elektrochemische Reaktionen sind in diesem Ersatzschaltbild vernachlässigt. Für deren Beschreibung müßten zusätzliche Widerstände parallel zu den Doppelschichtkapazitäten eingeführt werden, deren Werte allerdings stark spannungsabhängig wären und die zur Erörterung des Prinzips der Methode nicht nötig sind.

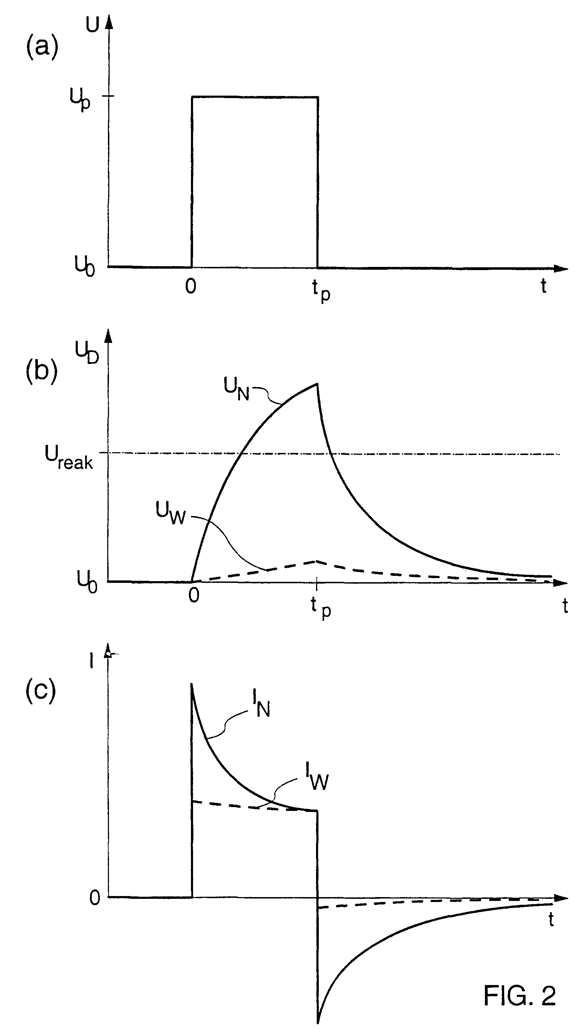

Der oben geschilderte Effekt wird erfindungsgemäß zur Ortsauflösung der Materialbearbeitung ausgenutzt. Macht man die Spannungsänderung nach relativ kurzer Zeit wieder rückgängig, so endet die Doppelschichtaufladung an den Ortsbereichen W und N wegen der unterschiedlichen Zeitkonstanten bei unterschiedlichen Niveaus, an denen dann die jeweilige Rückladung beginnt. Die Fig. 2 veranschaulicht diese Situation am Beispiel eines Rechteckpulses. Das oberste Schaubild (a) zeigt den zeitlichen Verlauf der angelegten Spannung U als Rechteckpuls mit einer Maximalspannung $U_p$ über einem Ruhespannungspegel $U_0$ und mit einer Breite $t_p$. Im Schaubild (b) ist der zeitliche Verlauf der Ladespannung an einer Doppelschichtkapazität $C_D$ gezeigt, wobei die durchgezogene Kurve $U_N$ für den Ortsbereich N kleinen Elektrodenabstandes und die gestrichelte Kurve $U_W$ für den Ortsbereich großen Elektrodenabstandes gilt. Durch überlegte Wahl von Ruhepegel, Pulshöhe und Pulsbreite kann man also dafür sorgen, daß der Ortsbereich N auf eine Spannung geladen wird, die den notwendigen Wert $U_{reak}$ zur Herbeiführung der gewünschten elektrochemischen Reaktion erreicht oder überschreitet, während die Ladespannung im Ortsbereich W unterhalb dieses Wertes bleibt. Der Spannungsverlauf an der Doppelschicht der Gegenelektrode verläuft analog.

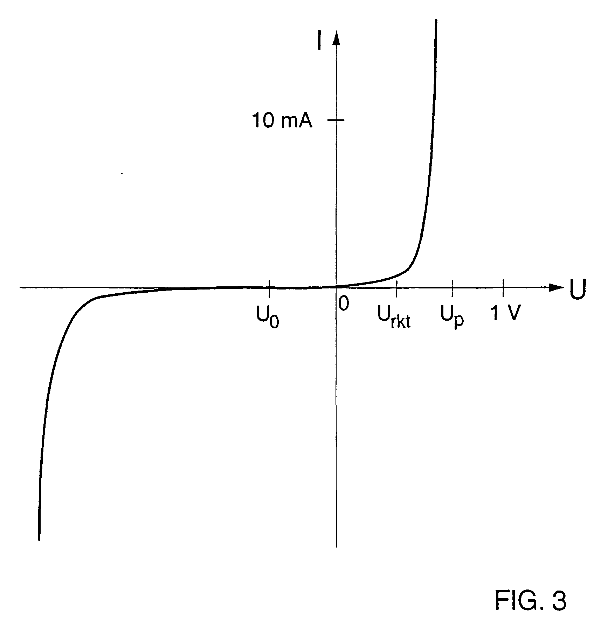

Für den Fall der lokalen Materialzersetzung (Abtragung) mit kurzen Pulsen, d.h. der lokalen Oxidation des Werkstückes, gilt meistens, daß die Ionenkonzentration des zugehörigen Redoxpartners im Elektrolyten sehr klein ist. Daher kann die Rückabscheidung an der Elektrode während des Pulses vernachlässigt werden, und die Abtragungsrate ist exponentiell von der Potentialdifferenz an der entsprechenden Doppelschicht abhängig. (Wie später anhand von Fig. 3 im Beispiel erläutert wird, ist die obige Schwellspannung somit nicht sehr scharf definiert. Vielmehr entspricht sie der Durchbruchsspannung einer Diode, wo der Strom innerhalb weniger 100 mV auf einen bequem meßbaren, d. h. hier, merkliche Reaktion anzeigenden Wert ansteigt.) Weiterhin gilt in erster Näherung, daß die Potentialdifferenz an der Doppelschicht, die während des Spannungspulses erreicht wird, proportional dem Elektrolytwiderstand und somit näherungsweise proportional der Länge des Strompfades durch den Elektrolyten bzw. dem Abstand der beiden Elektroden ist. Insgesamt hängt also die Reaktionsrate näherungsweise exponentiell vom Elektrodenabstand ab und die Reaktion ist scharf auf Bereiche mit genügend kleinem Elektrodenabstand begrenzt, also auf Bereiche, in denen der Elektrodenabstand unterhalb eines gewissen oberen Grenzwertes liegt.

Im Prinzip läßt sich also, bei gegebenen Werten des spezifischen Elektolytwiderstandes und der Doppelschichtkapazitäten, durch Bemessung von $U_0$, $U_p$ und $t_p$ ein oberer Grenzwert $d_{max}$ für den Elektrodenabstand definieren, bis zu dem die elektrochemische Reaktion stattfindet und oberhalb dessen keine Reaktion mehr stattfindet. Andererseits läßt sich durch Gestaltung der Elektrodengeometrie eine praktisch beliebig geformte und ausgedehnte dreidimensionale Zone an der das Werkstück darstellenden Elektrode definieren, innerhalb welcher der Elektrodenabstand den besagten Grenzwert nicht überschreitet, so daß ausschließlich diese Zone elektrochemisch bearbeitet wird.

In der Praxis, für eine spürbare Materialbearbeitung, muß natürlich eine große Vielzahl aufeinanderfolgender Spannungspulse angelegt werden, vorzugsweise in schneller Folge. Dabei muß aber beachtet werden, daß sich in den weit entfernten Bereichen, dort wo die Doppelschichtumladung der schnellen Pulsfolge nicht mehr folgen kann, aufgrund des Tiefpaßverhaltens des Elektroden-Elektrolyt-Systems eine mittlere Spannung einstellt, die durch das Tastverhältnis, $U_0$ und $U_p$ gegeben ist. Diese Spannung, die dem zeitlichen Mittelwert der Wellenform des Spannungsverlaufes entspricht, muß deutlich unterhalb eines Wertes $U_{rkt}$ bleiben, damit an diesen entfernten Bereichen keine Reaktion stattfindet.

Für den Fall also, daß eine Folge von Spannungspulsen definierter Breite $t_p$ und definierter Maximalspannung über einem definierten Ruhepegel $U_0$ angelegt wird, läßt sich die Vorschrift zur ortsselektiven Bearbeitung, also die Vorschrift zur Begrenzung der gewünschten elektrochemischen Reaktion auf die zu bearbeitende Zone des Werkstük-kes, wie folgt zusammenfassen: die Größen $U_0$, $U_p$, $t_p$, der Pulsabstand und die Geometrie des Zwischenraumes zwischen der Werkzeugelektrode und dem Werkstück sind so zu bemessen, daß nur Punkte der zu bearbeitenden Zone des Werkstückes eine Entfernung von der Elektrode innerhalb eines Bereiches haben, bei welchem die elektrochemische Doppelschicht durch jeden Puls auf eine Spannung aufgeladen wird, die größer ist als die zur Herbeiführung der gewünschten Reaktion notwendige Mindestspannung $U_{reak}$. Dabei ist der Rahmen für die Werte von $U_0$ und $U_p$ durch die elektrochemischen Eigenschaften des Systems gegeben. Wie oben erwähnt, darf mit $U_0$ allein auch an den entfernten Bereichen der Elektroden keine merkliche Reaktion stattfinden; andererseits muß $U_p$ betragsmäßig ausrei-chend groß sein, um die Werkstückelektrode an Punkten mit genügend kleinem Abstand elektrochemisch zu bearbei-ten.

Zur Festlegung von $U_0$ und $U_p$ kann daher die Strom/Spannungs-Kennlinie des elektrochemischen Zweielektroden-Systems (Systemkennlinie oder "Voltamogramm") zu Hilfe genommen werden. Fig. 3 skizziert ein Beispiel eines solchen Voltamogramms für eine Cu-Werkstückelektrode und eine Au-Werkzeugelektrode in einem 1 M KCl / 0,1 M $H_2SO_4$ Elektrolyten bei einem in konventioneller Elektrochemie üblichen Elektrodenabstand von mehreren Millimetern. Eventuelle Adsorption von Ionen, Komplexbildung oder Überstrukturbildung an den Elektroden sind in dieser Darstellung vernachlässigt. Bei positiven Spannungen an der Werkstückelektrode steigt der Strom oberhalb einer "Schwell-spannung" $U_{rkt}$ stark an. Hier findet auf der Cu-Elektrode die Oxidation des Cu und an der Gegenelektrode die Reduk-tion von $H_3O^+$ aus dem Elektrolyten zu Wasserstoff statt. Ein sinnvoller Wert für die Spannung $U_p$, welche die lokale Bearbeitung bewirken soll, ist also z.B. 700 mV, mehrere 100 mV positiver als die Schwellspannung $U_{rkt}$. In dem gezeigten Voltamogramm, das quasi unter Gleichspannungsbedingungen aufgenommen wurde, setzt sich $U_{rkt}$ aus den Potentialabfällen beider Doppelschichten zusammen; der Reaktionsstrom muß über beide in Serie geschaltete Doppelschichten fließen ($U_{rkt} = U_{reak} + U_{gegenreak}$). Bei kurzen Pulsen, d.h. vor Einstellung des quasi-stationären Stromflusses des Systems, könnte ein über eine Doppelschicht fließender Reaktionsstrom allerdings auch zur Ladung der anderen Doppelschicht beitragen, ohne daß dort bereits eine Reaktion stattfindet. Eine Bearbeitung des Werkstücks wäre dann auch bei Pulsspannungen $U_p$ unterhalb der im Voltamogramm gemessenen Gleichspannungs-$U_{rkt}$ möglich. Mit der Wahl $U_p$ größer als das gemessene $U_{rkt}$ liegt man allerdings auf der sicheren Seite für eine Reaktion.

Im mittleren Bereich des Voltamogramms fließt kein merklicher Reaktionsstrom, d.h. das Werkstück wird nicht bearbeitet. An den nicht zu bearbeitenden Stellen muß sichergestellt werden, daß das Potential der Elektroden auch nach akkumulativer Aufladung von $C_D$ aufgrund des oben diskutierten Tiefpaßverhaltens in diesem Bereich bleibt. Ein Wert für $U_0$ von -400 mV erfüllt bei einem Tastverhältnis von 1:10 und dem oben festgelegten $U_p$ von +700 mV diese Bedingungen hinreichend.

Für die z.B. nach obiger Vorschrift für ein gegebenes elektrochemisches System gefundenen Parameter $U_0$ und $U_p$ sowie für eine zunächst frei gewählte Pulslänge $t_p$ kann nun die Obergrenze $d_{max}$ der für eine Bearbeitung einzuhaltenden Entfernung d zwischen Werkstück und Werkzeug bestimmt werden.

Ein erster Weg besteht darin, die Obergrenze $d_{max}$ experimentell zu bestimmen:

Der gewünschte Effekt, d.h. das Stattfinden genügender Aufladung bei jedem Puls, kann durch Beobachtung des Elektrodenstroms verifiziert werden. Fig. 2 zeigt im Schaubild (c) auf der gleichen Zeitskala wie das Schaubild (a) den Verlauf des Stroms bei großem Elektrodenabstand (gestrichelte Kurve). An Orten sehr großen Abstandes, d.h. bei großem Elektrolytwiderstand und demzufolge großer Zeitkonstante $\tau$, werden die Doppelschichtkapazitäten wäh-rend des Pulses nicht merklich umgeladen. Der Strom ist daher während des Pulses praktisch konstant und folgt der Form des Spannungspulses. Mit abnehmendem Elektrodenabstand werden die Doppelschichten auf eng beabstandeten Elektrodenbereichen zunehmend stark umgeladen, was daran erkennbar ist, daß an der Vorderflanke des Pulses eine ausgeprägte Ladespitze herauswächst (durchgezogene Kurve). Dieser Ladestrom nimmt dann während des Spannungspulses stark ab. Zu diesem Strom addiert sich natürlich noch der konstante Ladestrom der weiter entfernt liegenden Ortsbereiche, so daß die Umladung nur das oberste Plateau des Strompulses beeinflußt. Nach dem Ende des Spannungspulses werden die umgeladenen Doppelschichtbereiche ebenso schnell wieder entladen, was sich als entgegengesetzte Rücklade-Stromspitze bemerkbar macht. Natürlich werden auch die weiter entfernt liegenden Bereiche der Doppelschicht wieder entladen. Da jedoch dort die aufgelaufene Ladespannung klein und die Zeitkonstante groß ist, tragen diese Bereiche kaum etwas zu der entgegengesetzten Spitze bei.

Durch Beobachtung der Lade- oder Rückladespitzen des Elektrodenstroms kann also geprüft werden, ob ein Elektrodenabstand unterhalb $d_{max}$ liegt, also klein genug ist, um die ausreichende Umladung zur Herbeiführung der gewünschten elektrochemischen Reaktion zu gewährleisten. In einem Versuch kann z.B. eine Testelektrode mit relativ großer und ebener Stirnfläche an eine ebenfalls ebene Werkstückfläche allmählich angenähert werden, wobei die Parameter $U_0$, $U_p$, $t_p$ auf bekannten, voreingestellten Werten gehalten werden. Sobald der Elektrodenstrom deutliche Lade- oder Rückladespitzen zeigt, ist die zur Herbeiführung der Reaktion erforderliche Obergrenze $d_{max}$ des Elektrodenabstandes für bestimmte Bereiche der Elektroden erreicht. Dieser Wert kann dann, wenn er praktikabel erscheint, zur Dimensionierung der Elektrodengeometrie bzw. des Elektrodenabstandes für den Bearbeitungsvorgang benutzt werden. Ist die ermittelte Obergrenze $d_{max}$ nicht praktikabel (z.B. wenn $d_{max}$ größer ist als die zu erzeugenden Strukturen), kann nach Änderung der obengenannten Parameter und/oder des spezifischen Elektrolytwiderstandes r (Änderung der Elektrolytkonzentration) ein anderer Wert für $d_{max}$ eingestellt werden.

Allgemein gilt, daß eine Verkürzung von $t_p$ eine Verkleinerung von $d_{max}$ bewirkt, da nun die Doppelschicht der zu bearbeitenden Bereiche schneller umgeladen werden muß, was nur bei kleinerem Widerstand entlang des Strompfades im Elektrolyten, also kleinerem Abstand, hinreichend erfüllbar ist. Analog bewirkt auch eine Verringerung der Elektrolytkonzentration eine Verringerung von $d_{max}$.

Der Zusammenhang der Verfahrensparameter $U_0$, $U_p$, $U_{rkt}$, $t_p$, r und $d_{max}$ kann auch rechnerisch mittels einer mathematischen Gleichung angegeben werden, welche die im Schaubild (b) der Fig. 2 gezeigte Ladespannungskurve $U(t)$ beschreibt. Diese Gleichung lautet allgemein:

$$U(t) = U_0 + (U_p - U_0) \cdot \{1 - \exp[-t/\tau]\} . \qquad (1)$$

Die Zeitkonstante $\tau$ der Umladung ist durch das Produkt aus dem Widerstand des Strompfades durch den Elektrolyten und der Gesamt-Doppelschichtkapazität gegeben. Für planparallele Elektroden, was zumindest im Arbeitsspalt lokal erfüllt ist, gilt somit $\tau = r \cdot c \cdot d$, mit $c = c_1 \cdot c_2/(c_1+c_2)$, wobei $c_1$ und $c_2$ die Kapazitäten der Doppelschichten pro Flächeneinheit an den beiden Elektroden sind; d bezeichnet den Abstand der Elektroden.

Die Bedingungen für das Herbeiführen der gewünschten elektrochemischen Reaktion sind wie gesagt erfüllt, wenn die Ladespannung an der Doppelschicht spätestens am Ende des Spannungspulses, also für t=tp, den Wert $U_{rkt}$ erreicht. Das heißt mathematisch, nach Einsetzen von $t=t_p$ und $\tau=r \cdot c \cdot d$:

$$U_0 + (U_p - U_0) \cdot \{1 - \exp[-t_p/(r \cdot c \cdot d)]\} \geq U_{rkt} . \qquad (2)$$

Aus dieser Ungleichung ergibt sich also, z.B. bei vorgegebenen anderen Parametern, der maximale Elektrodenabstand $d_{max}$, für den diese Bedingung $U(t)=U_{rkt}$ erfüllt ist. Es bleibt anzumerken, daß die obigen mathematischen Beziehungen formuliert sind mit der Konvention, daß positive Spannungen an der Anode anliegen. Im Falle einer lokalen Abtragung am Werkstück ist das Werkstück die Anode.

Ist die Pulshöhe $(U_p-U_0)$ nicht allzuviel größer als die zur Reaktion nötige Spannung $(U_{rkt}-U_0)$, etwa wenn die besagte Pulshöhe weniger als doppelt so hoch ist wie die Mindesthöhe, ab welcher eine merkliche materialbearbeitende elektrochemische Reaktion stattfindet, kann man näherungsweise davon ausgehen, daß nach einer Ladedauer $t_p$, die dem Wert einer Zeitkonstanten $\tau = r \cdot c \cdot d_{max}$ entspricht, die Doppelschichten ausreichend umgeladen sind. Die obige Bedingung für $d_{max}$ reduziert sich dann auf die einfache Abschätzung:

$$t_p \approx r \cdot c \cdot d_{max}. \qquad (3)$$

Typische Werte sind $r = 10\ \Omega cm$ (für eine Elektrolytkonzentration von 1 mol/Liter, also einen 1 M Elektrolyten) und $c = 10\ \mu F/cm^2$. Soll in diesem Fall die elektrochemische Reaktion nur an Zonen der Elektroden stattfinden, die weniger als $d_{max}=1\mu m$ Abstand haben, dann ergibt sich für die Pulsdauer

$$t_p \approx 10\Omega cm \cdot 1\mu m \cdot 10\mu F/cm^2 = 10^{-8}\ s . \qquad (4)$$

Rechteckpulse dieser Dauer sind mit konventioneller Elektronik problemlos erreichbar.

Eine Verbesserung der Ortsauflösung, also Verkleinerung von $d_{max}$, ist durch Verkürzung der Pulsbreite $t_p$ und/oder Verlängerung der Zeitkonstanten $\tau$ möglich. Pulse bis herab zu 1 ns Länge dürften mit kommerziell verfügbaren Mitteln generierbar sein. Die Zeitkonstante kann verlängert werden, indem der spezifische Elektrolytwiderstand erhöht bzw. die Konzentration verringert wird. Einziges Kriterium für die Minimalkonzentration ist, daß sich genügend Ionen im Spalt zwischen Werkzeugelektrode und Werkstück befinden, um die Doppelschichten umzuladen und den Reaktionsstrom zu leiten. Es kann also durchaus mit Konzentrationen von 0,01 bis 0,1 M gearbeitet werden. Hiermit läßt sich die in obiger Beispielsberechnung angeführte Ortsauflösung ($d_{max}$) von 1 μm um einen Faktor von 10 bis 100 unterschreiten.

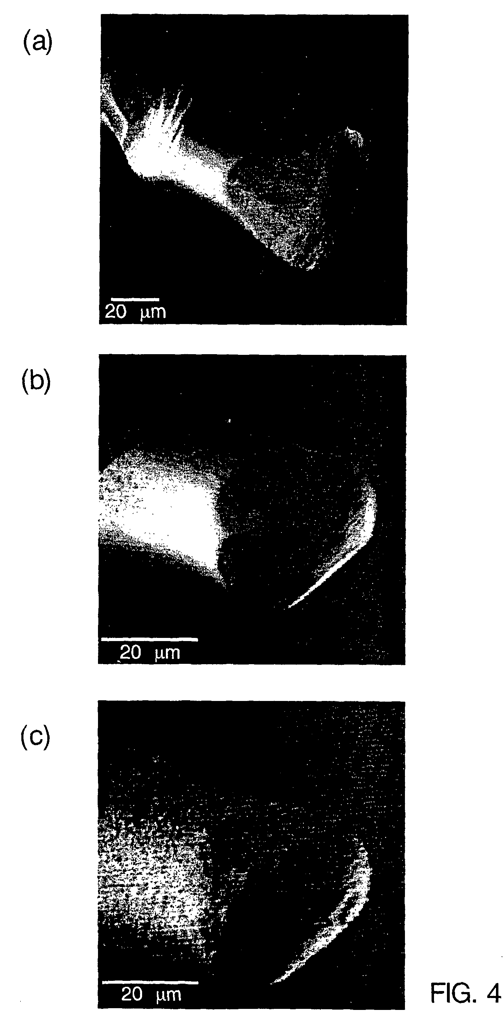

Zur Demonstration der technischen Realisierbarkeit des erfindungsgemäßen Verfahrens wurde ein Kupferdraht von 40 μm Durchmesser elektrochemisch mit kurzen Pulsen bearbeitet. Die Ergebnisse sind in den Bildern der Fig. 4 veranschaulicht. Das erste Bild (a) in Fig. 4 zeigt eine rasterelektronenmikroskopische Aufnahme des Drahtes nach dem Abschneiden mit einem Seitenschneider. Unter Verwendung eines Goldfilms als Gegenelektrode (Werkzeugelektrode) wurde dieser Draht anschließend in einer Elektrolytlösung, die 1 M KCl und 0,1 M $H_2SO_4$ enthielt, mit 50 ns breiten Rechteckpulsen von +1,1 V Höhe gegenüber der Gegenelektrode und einem Pulsdauer/Pulspausen-Verhältnis von 0,1 (Tastverhältnis 1:11) für 30 Minuten geätzt. Zur Vermeidung der Korrosion des Drahtes in dem chloridhaltigen Elektrolyten während der Pulspausen wurde die Ruhespannung des Drahtes auf -400 mV gegenüber der Gegenelektrode eingestellt.

Die Spitze des Drahtes wurde mit einer elektromagnetischen Stellvorrichtung während der gesamten Ätzdauer in wenigen Zehntel μm Entfernung von der Goldoberfläche gehalten. Das Ergebnis ist im zweiten Bild (b) der Fig. 4 gezeigt. Man erkennt, daß der Draht vorne, wo er der Goldoberfläche direkt in dichtem Abstand gegenüberstand, flachgeätzt ist, während die Seitenflächen praktisch unverändert blieben. Es bildete sich eine scharfe Kante mit einem Krümmungsradius von wenigen μm, welche die geätzte Fläche umgrenzt. Eine elektrochemische Reaktion trat also nur dort ein, wo der Draht der Goldoberfläche so nahe gegenüberstand, daß die Doppelschichtkapazität am Draht ausreichend umgeladen werden konnte. Die Doppelschicht an den Seitenflächen wurde hingegen nicht genügend für eine merkliche Reaktion umgeladen. Die Kantenschärfe bzw. Ortsauflösung im μm-Bereich stimmt gut mit der oben abgeschätzten überein.

Zum Vergleich wurde ein weiteres Ätzen der Drahtspitze mit wesentlich breiteren Pulsen von 10 μs Dauer und sonst gleichen Bedingungen durchgeführt. Das Ergebnis ist im dritten Bild (c) der Fig. 4 gezeigt. Man erkennt, daß die Kante viel stärker verrundet wurde und auch der Schaft des Drahtes merklich angeätzt wurde. Die lange Pulsdauer reichte also zu Umladen der Doppelschicht auf großen und relativ weit von der Goldoberfläche entfernten Bereichen. Dieses Ergebnis unterscheidet sich also nicht mehr wesentlich von den Resultaten der konventionellen Gleichspannungs-Elektrochemie.

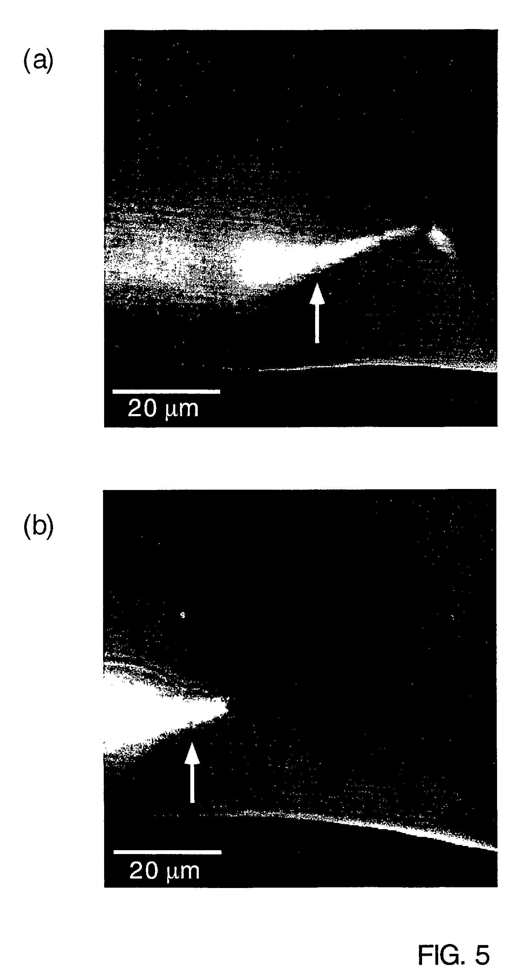

Die Ortsauflösung wird noch besser, wenn man die Elektrolytkonzentration verringert. Durch 60-minütiges Ätzen in einem um den Faktor 10 verdünnten Elektrolyten (0,1 M KCl und 0,01 M $H_2SO_4$) mit 50 ns breiten Spannungspulsen wurde eine Kupferdrahtspitze der im oberen Bild (a) der Fig. 5 gezeigten Gestalt bearbeitet. Wie das im unteren Bild (b) der Fig. 5 gezeigte Ergebnis offenbart, wurde die Spitze durch diese Bearbeitung um ca. 10 μm verkürzt (zur Orientierung ist in beiden Figuren ein Defekt am Drahtschaft markiert). Die Kante ist nun deutlich schärfer als im Bild (b) der Fig. 4. Wegen der kleineren Elektrolytkonzentration war die Abtragungsrate niedriger als bei dem im Bild (b) der Fig. 4 veranschaulichten Experiment. Dies kann gewünschtenfalls durch einen geringeren Elektrodenabstand ausgeglichen werden.

Der Verlauf des Elektrodenstroms bei dem Experiment, das mit Pulsbreiten von 50 ns durchgeführt wurde und zu dem im Bild (b) der Fig. 4 gezeigten guten Ergebnis führte, entsprach der durchgezogenen Kurve im Schaubild (c) der Fig. 2. Die Stromspitzen sind, wie weiter oben erläutert, stark abstandsabhängig und zeigen direkt die Umladung der Doppelschichten und damit die einsetzende Reaktion an. Sie eignen sich daher auch als Regelgröße für die Nachregelung des Elektrodenabstandes.

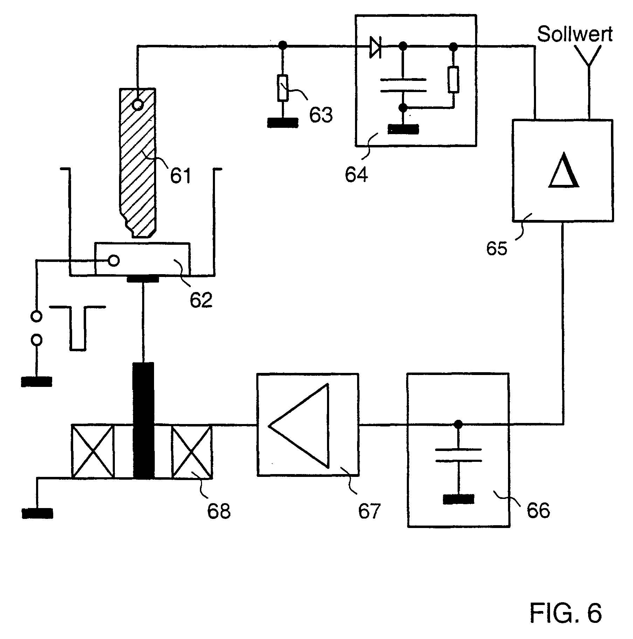

Ein Beispiel für einen diesbezüglichen Regelkreis, wie er auch im beschriebenen Experiment angewandt wurde, ist in Fig. 6 skizziert. Zwischen die eine Elektrode 62 (z.B. eine Goldelektrode) und die andere Elektrode 61 (z. B. ein zu ätzendes Werkstück) und einen Strommeßwiderstand 63 werden die kurzen Spannungspulse gelegt, wie links als negativer Puls gezeigt. Der Pulsgenerator und die Einrichtung, welche eine geeignete Ruhespannung zwischen den Pulsen erzeugt und Bestandteil des Pulsgenerators sein kann, sind nicht dargestellt. Die (im gezeigten Fall aufgrund der speziellen Schaltung positive) Rückladespitze des Elektrodenstroms wird am Meßwiderstand 63 mittels eines Spitzendetektors 64 gemessen und als Regelgrößen-Istwert in einem Istwert/Sollwert-Vergleicher 65 mit einem Sollwert verglichen. Die Differenz bestimmt über einen Tiefpaß (Integrator bzw. I-Regler) 66 und einen nachgeschalteten Verstärker 67 die Position eines elektromagnetischen Stellgliedes 68, das einen Verstellweg von einigen 10 μm hat. Diese Regelung garantiert, daß der Spalt zwischen der zu bearbeitenden Zone des Werkstückes 61 und der Werkzeugelektrode 62 bei fortschreitender Bearbeitung immer auf der gewünschten Abmessung gehalten wird, die einerseits klein genug ist, um die gewollte Ortsauflösung zu erhalten, andererseits aber hoch genug ist, um einen Kurzschluß oder die weiter oben beschriebene Ladungsträgerverarmung im Spalt zu vermeiden. Der Sollwert für die Regelgröße wird dementsprechend eingestellt.

Statt der Rückladespitze des Elektrodenstroms kann auch die entgegensetzte Ladespitze, die an der Vorderflanke des angelegten Spannungspulses erscheint, oder die Spitze-Spitze-Amplitude des Elektrodenstroms als Regelgröße verwendet werden.

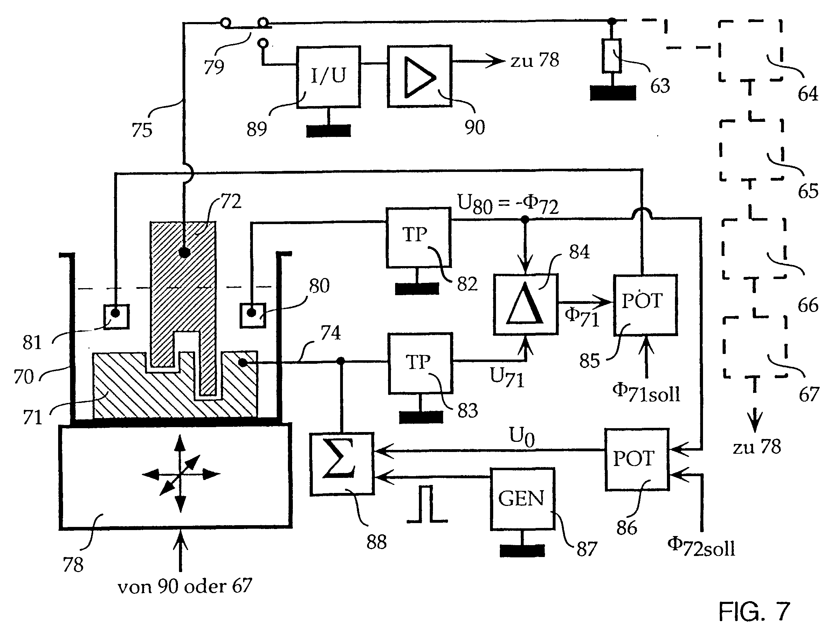

Um den Mittelwert der angelegten Spannung innerhalb desjenigen Bereichs zu halten, in welchem kein merklicher Reaktionsstrom fließt (für den in Fig. 3 skizzierten Fall der Oxidation von Cu bedeutet das im Bereich links von $U_{rkt}$ in Fig. 3), kann auch ein bipotentiostatisches Regelungssystem angewendet werden. Der Mechanismus bipotentiostatischer Regelung ist in der Elektrochemie allgemein bekannt; seine Anwendung zur definierten Einstellung des Mittelwertes der angelegten Spannung bei dem erfindungsgemäßen Materialbearbeitungs-Verfahren wird nachstehend anhand der Fig. 7 veranschaulicht.

Die Fig. 7 zeigt in Blockdarstellung das bipotentiostatische Regelungssystem am Beispiel der elektrochemischen Ätzung einer Vertiefung in ein Werkstück 71 mittels einer Werkzeugelektrode 72. Das Werkstück 71, z.B. ein Körper aus Kupfer (Cu), liegt in einem mit geeignetem Elektrolyt gefüllten Gefäß 70, das seinerseits auf einem Vorschubtisch 78 steht. Die ortsfeste Werkzeugelektrode 72, z.B. ein Draht aus einer Platin-Iridium-Legierung (Pt/Ir), taucht in den Elektrolyten bis nahe an die zu ätzende Oberfläche des Werkstückes 71. Die mit kurzen Pulsen behaftete Bearbeitungsspannung wird über eine Zuleitung 74 an das Werkstück 71 gelegt; der Bearbeitungsstrom fließt vom Werkstück 71 durch den Elektrolyten zur Werkzeugelektrode 72 und von dort nach Masse, im gezeigten Fall über die Leitung 75 und einen Strommeßwiderstand 63. Insoweit ähnelt die Anordnung dem in Fig. 6 gezeigten Aufbau, nur daß Werkzeug und Werkstück vertauscht sind.

Die an die Zuleitung 74 zum Werkstück 71 zu legende Spannung (gegenüber dem Massepotential der Werkzeugelektrode 72) besteht, gemäß dem Grundgedanken der Erfindung, aus kurzen pulsförmigen Ausschlägen relativ zu einem Mittelwert. Das heißt, diese Spannung entspricht einer Überlagerung von Pulsen der Amplitude $U_p$-$U_0$ über einem Ruhepegel $U_0$. Bei der in Fig. 7 gezeigten Ausführungsform werden die (im vorliegenden Beispielsfall positiven) Pulse mit der Amplitude $U_p$-$U_0$ gegenüber Masse von einem Pulsgenerator 87 erzeugt und in einem Summierglied 88 dem Ruhepegel $U_0$ überlagert, welcher mittels des die Elemente 80-86 umfassenden bipotentiostatischen Regelungssystems eingestellt wird.

Hierzu befinden sich im Elektrolyten eine Referenzelektrode 80 und eine Gegenelektrode 81. Das gegenüber Masse gemessene Potential $U_{80}$ der Referenzelektrode 80 und das gegenüber Masse gemessene Potential $U_{71}$ des Werkstückes 71 werden, jeweils über ein zugeordnetes Tiefpaßfilter 82 bzw. 83, auf die Eingänge eines Differenzbildners 84 gegeben. Der dort gebildete Differenzwert $U_{71}$-$U_{80}$, d.h. das bezüglich der Referenzelektrode 80 gemessene elektrochemische Potential $\Phi_{71}$ des Werkstückes 71, wird auf einen ersten Eingang eines Potentiostaten 85 gegeben, an dessen zweiten Eingang der Sollwert $\Phi_{71soll}$ für das elektrochemische Potential des Werkstückes 71 gelegt wird. Der Ausgang des Potentiostaten 85 stellt das Potential der Gegenelektrode 81 so ein, daß das mittlere tiefpaßgefilterte elektrochemische Potential $\Phi_{71}$ des Werkstückes 71 gegenüber der Referenzelektrode 80 dem vorgegebenen Sollwert $\Phi_{71soll}$ gleicht.

Weiterhin entspricht die an der Referenzelektrode 80 gegenüber Masse gemessene tiefpaßgefilterte Span-nung $U_{80}$ dem negativen elektrochemischen Potential -$\Phi_{72}$ der auf Masse liegenden Werkzeugelektrode 72, bezogen auf die Referenzelektrode 80 (der Spannungsabfall am Strommeßwiderstand 63 ist im allgemeinen als klein gegenüber $\Phi_{72}$ anzunehmen und daher vernachlässigbar). Ein zweiter Potentiostat 86 empfängt dieses Signal und regelt über den an den Summierverstärker 88 angelegten Ruhepegel $U_0$ des Werkstückes 71 das gegenüber der Referenzelektrode 80 gemessene elektrochemische Potential der Werkzeugelektrode 72 auf den vorgegebenen Sollwert $\Phi_{72soll}$ ein. Beide Potentiostaten 85 und 86 beeinflussen sich natürlich über die elektrochemische Zelle gegenseitig und müssen eventuelle Regelabweichungen ausgleichen. Bei geeigneter Dimensionierung der Zeitkonstanten der Regelglieder werden die (tiefpaßgefilterten,) gegenüber der Referenzelektrode 80 gemessenen elektrochemischen Potentiale von Werkstück und Werkzeugelektrode auf die vorgegebenen, unabhängig voneinander wählbaren Sollwerte $\Phi_{71soll}$ und $\Phi_{72soll}$ eingestellt. Beide Sollwerte werden so gewählt, daß ohne angelegte Pulse kein merklicher Reaktionsstrom fließt, weder an der Werkzeugelektrode noch am Werkstück, d.h. am Werkstück die für eine Bearbeitung gewünschte Reaktion nicht merklich stattfindet und an der Werkzeugelektrode Nebenreaktionen ausreichend unterbunden sind.

Die Tiefpaßfilter 82, 83 sollen verhindern, daß die Potentiostaten 85 und 86 durch die Pulse selbst gestört werden. Deswegen ist ihre Grenzfrequenz viel kleiner als die Wiederholfrequenz f der vom Generator 87 erzeugten Pulse (d.h. die Zeitkonstante der Filter ist z.B. um das $10^3$- bis $10^4$-fache größer als 1/f).

Dieses Regelungssystem bewirkt, daß die Spannungsdifferenz zwischen Werkstück und Werkzeug und somit der erwähnte Ruhepegel $U_0$ bestimmt wird durch die bezüglich der Referenzelektrode 80 eingestellten elektrochemischen Potentiale von Werkstück 71 und Werkzeug 72. An dieser Stelle sei angemerkt, daß das elektrochemische Potential des Werkzeuges meist im Bereich einiger 100 mV frei gewählt werden kann, so daß eine potentiostatische Regelung dieses Potentials nicht unbedingt notwendig ist. Demgemäß ist es auch möglich, den Potentiostaten 86 durch eine einstellbare Spannungsquelle zu ersetzen.

Die Tiefpaßfilterung und die beschriebene bipotentiostatische Kontrolle bewirken, daß die durch das Tastverhältnis der Pulse und deren Maximalspannung $U_p$ beeinflußten mittleren Potentiale von Werkstück 71 und Werkzeugelektrode 72 automatisch auf die vorgegebenen elektrochemischen Sollpotentiale nachgeregelt werden. Dies vereinfacht die Bearbeitung solch labiler Systeme wie eines Cu-Films im Gleichgewicht mit einem Cu-Ionen enthaltenden Elektrolyten. Bereits geringe Verschiebungen des elektrochemischen Potentials des Werkstückes, d.h. des Films, würden zur großflächigen Auflösung des Films oder zu dessen Weiterwachsen führen.

Zur Einstellung und auch zur Regelung des Abstandes zwischen Werkstück 71 und Werkzeugelektrode kann statt des in Fig. 6 gezeigten elektromagnetischen Stellelementes 68 der in Fig. 7 gezeigte Piezoverschiebetisch 78 verwendet werden. Dieser kann in 3 Dimensionen verstellbar sein und mit 3 zugeordneten Dehnungsmeßstreifen (nicht gezeigt) ausgestattet werden, um die absolute Position des Werkstückes 71 gegenüber der Werkzeugelektrode 72 zu messen. Der dem Berührungszustand entsprechende Nullpunkt des Abstandes zwischen Werkstück und Werkzeug kann durch das Auftreten eines Tunnelstroms zwischen diesen beiden Elektroden gemessen werden. Hierzu wird die von der Werkzeugelektrode 72 kommende Leitung 75 über einen Schalter 79 vom Strommeßwiderstand 63 abgekoppelt und auf einen hochempfindlichen Strommeßverstärker (I/U-Konverter) 89 mit einer Konversion von $10^6$ V/A umgeschaltet, der den Tisch 78 über den Ausgangsverstärker 90 eines Rastertunnelmikroskops betreibt. An den Dehnungsmeßstreifen wird die absolute Position des Tisches 78 und somit der Werkstückelektrode 71 beim Auftreten des Tunnelstroms gemessen. Danach wird die Leitung 75 wieder auf den Strommeßwiderstand 63 umgeschaltet, der Tisch 78 wird um das Maß und in die Richtung des gewünschten Mindestabstandes zurückgefahren, was sich über die Dehnungsmeßstreifen verifizieren läßt. Dann werden die Bearbeitungspulse angelegt. Der weitere Vorschub in der gewünschten Richtung während der Bearbeitung kann dann durch geeignete Ansteuerung des Tisches 78 z.B. so geregelt werden, wie es in Verbindung mit Fig. 6 beschrieben wurde, d.h. indem die kapazitive Komponente des Elektrodenstroms als Regelgröße dient, etwa unter Verwendung der in Fig. 6 gezeigten Elemente 64, 65, 66 und 67, wie in Fig. 7 gestrichelt angedeutet. Eine andere Möglichkeit ist der automatische Vorschub des Tisches 78 mit konstanter Geschwindigkeit, die langsam genug gewählt ist, daß es während der Bearbeitung nicht zum Kurzschluß der beiden Elektroden durch elektrischen Kontakt kommt.

Das in Fig. 7 gezeigte bipotentiostatische Regelungssystem kann zusätzlich dazu benutzt werden, einen Cu-Film in kontrollierter Weise herzustellen, bevor dieser Film als Werkstück 71 durch Spannungspulse der Amplitude $U_p$-$U_0$ über einem in der vorstehend beschriebenen Weise geregelten Ruhespannungspegel $U_0$ bearbeitet wird. Der Cu-Film wird zunächst auf einem leitfähigen Substrat (z.B. ein Gold-Film auf einem Glasplättchen) aus einem Cu-Ionen enthaltenden Elektrolyten (z.B. 0,1 M $HClO_4$/0,05 M $CuSO_4$) abgeschieden. Hierzu wird das elektrochemische Potential des Substrats mit Hilfe des Potentiostaten 85 negativ bezüglich des $Cu/Cu^{2+}$-Redoxpotentials in diesem Elektrolyten eingestellt. Die Werkzeugelektrode 72 (z.B. ein plangeschliffener Pt/Ir-Draht von 50 um Durchmesser) kann sich bereits im Elektrolyten befinden. Ihr elektrochemisches Potential wird mit Hilfe des Bipotentiostaten so eingestellt, daß über sie kein merklicher Strom fließt. Beim vorliegenden Beispiel heißt dies z.B. 100 mV positiv gegenüber dem $Cu/Cu^{2+}$-Redoxpotential. Nach Abscheiden eines Cu-Films der gewünschten Dicke wird die elektrochemische Reaktion gestoppt, indem der Sollwert $\Phi_{71soll}$ des elektrochemischen Potentials des Werkstückes 71 auf das Redoxpotential von $Cu/Cu^{2+}$ eingestellt wird. Das bedeutet, daß kein meßbarer Cu-Abscheidungs- bzw. Auflösungsstrom fließt, der ein großflächiges Weiterwachsen oder Auflösen des Films zur Folge hätte. Der Cu-Film ist bei diesem Potential während der Zeitdauer der Bearbeitung, gegebenfalls über Stunden, stabil. Die Bearbeitung des Films erfolgt dann durch Anlegen von Spannungspulsen der Amplitude $U_p$-$U_0$ über dem Ruhepegel $U_0$. Die potentiostatische Regelung des elektrochemischen Potentials des Werkstückes auf das Redoxpotential von $Cu/Cu^{2+}$ bewirkt, daß außerhalb der zu bearbeitenden Zone der Cu-Film unverändert bleibt.

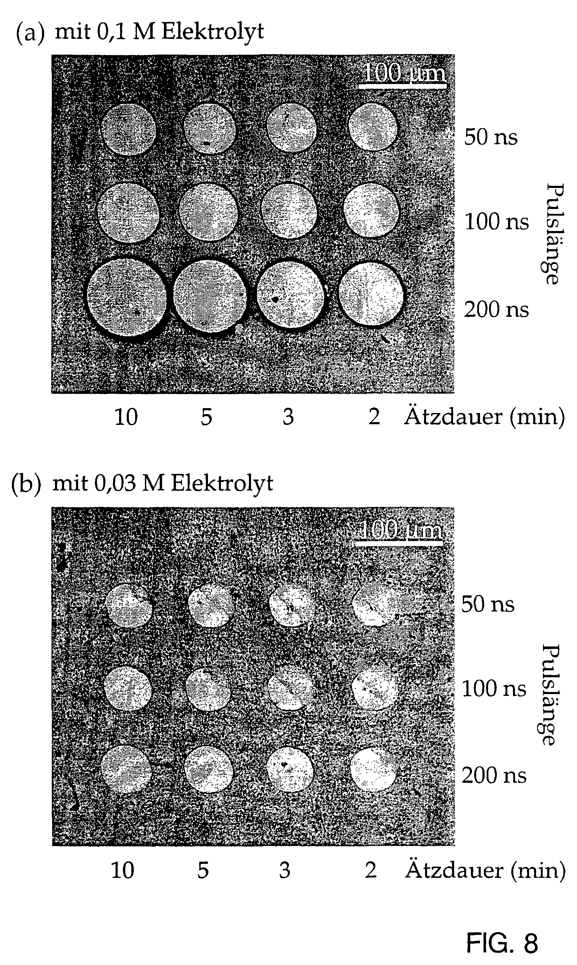

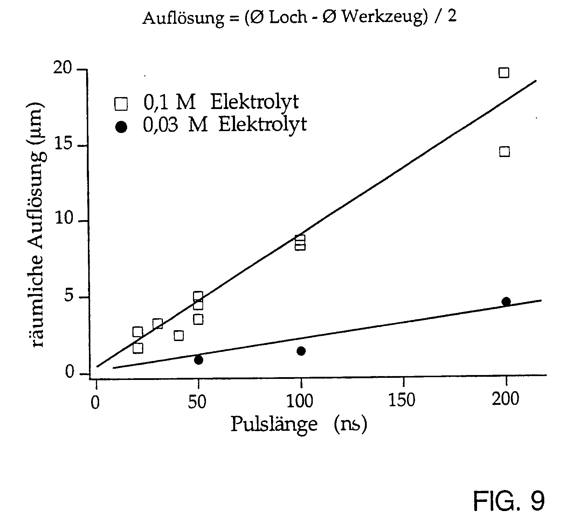

Die Figur 8 zeigt mikroskopische Aufnahmen von Löchern, die erhalten wurden durch elektrochemische Materialbearbeitung eines in der vorstehend beschriebenen Weise hergestellten Cu-Films auf Gold in dem dort erwähnten Elektrolyten. Es wurde die anhand der Fig. 7 beschriebene bipotentiostatische Regelung angewendet. Die Löcher sind Resultate verschiedener Bearbeitungen mit Spannungspulsen zwischen 50 ns und 200 ns Dauer und 1,5 V Pulshöhe (Werkstückelektrode positiv, lokale Oxidation des Cu-Films), und zwar bei verschiedenen Gesamtätzdauern. Es wurden Versuche mit verschiedenen Elektrolytkonzentrationen gefahren. Die Bilder (a) und (b) in Fig. 8 zeigen die Ergebnisse bei Konzentrationen von 0,1 M bzw. 0,03 M. Das Tastverhältnis der Pulse betrug in allen diesen Experimenten 1:10. Als Werkzeug fand ein plangeschliffener Pt/Ir-Draht mit einem Durchmesser von 50 μm Verwendung, der mit der Stirnseite nahe an den Cu-Film gebracht wurde. Der Abstand der Stirnfläche zum Cu-Film betrug ca. 0,5 μm. Die Fig. 9 zeigt in einem Diagramm die erreichte räumliche Auflösung (Lochdurchmesser minus Drahtdurchmesser dividiert durch 2), d.h. die Breite des Arbeitsspaltes in Abhängigkeit von den Ätzparametern. Die räumliche Auflösung skaliert ziemlich linear mit der Pulslänge und der Elektrolytkonzentration; d.h., die Auflösung ist umso "gröber" (weniger fein), je größer die Pulslänge bzw. je höher die Elektrolytkonzentration ist. Dies ist in Übereinstimmung mit dem weiter oben beschriebenen Modell, nach dem die typische Ladezeitkonstante der Doppelschicht $\tau$ = r·c·d linear mit dem spezifischen Elektrolytwiderstand r und dem Elektrodenabstand d skaliert. Bei kürzeren Pulsen oder geringeren Elektrolytkonzentrationen bzw. höheren Elektrolytwiderständen ist daher der Abstand zwischen Werkstück und Werkzeugelektrode, bis zu dem die Umladung der Doppelschicht für eine Reaktion noch ausreichend stattfindet, entsprechend geringer.

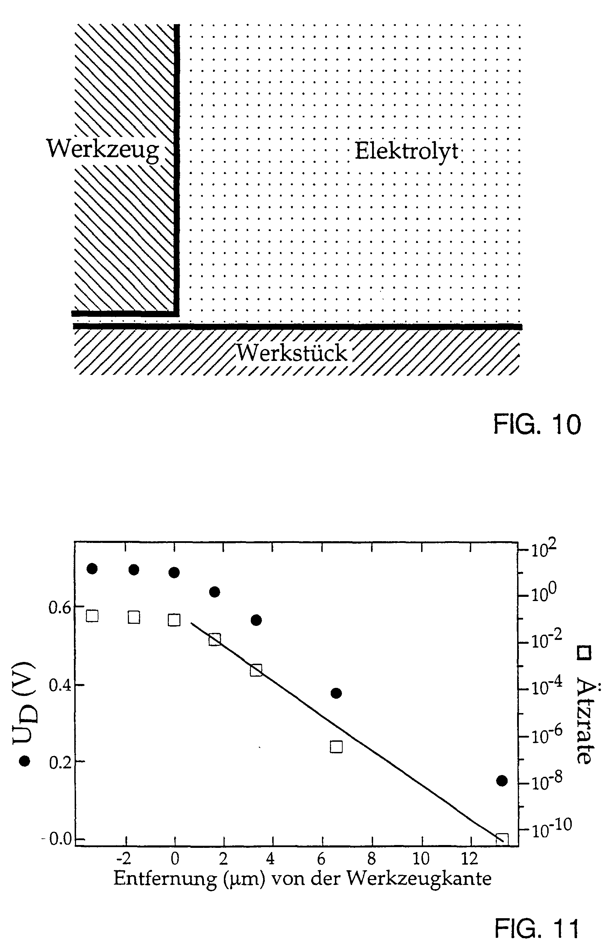

Die in der Figuren 8 und 9 veranschaulichten Versuchsergebnisse lassen sich auch bestätigen durch Betrachtung der Ätzrate in einer simulierten Elektrodenanordnung, wie sie in Fig. 10 gezeigt ist. Angenommen sei eine spezifische Doppelschichtkapazität c = 10 µF/cm$^2$ an den Elektroden und ein spezifischer Elektrolytwiderstand r = 30 Ωcm. Die Umladung der Doppelschichten der Elektroden wurde für 50 ns lange, 1,5 V hohe Spannungspulse in einem 0,1 M HClO$_4$ Elektrolyten berechnet. Die zylinderförmige Werkzeugelektrode steht wenige 100 nm vor dem das Werkstück bildenden Cu-Film. Fig. 11 zeigt die Werte der Umladespannung $U_D$, wie sie kurz vor Ende eines Spannungspulses in der Doppelschicht der Werkstückelektrode erreicht werden. Während die dem Werkzeug direkt gegenüberliegenden Elektrodenbereiche maximal umgeladen werden, sinkt diese Umladespannung mit steigender Entfernung von der Werkzeugkante ungefähr linear ab. Die Cu-Auflösungsrate (Ätzrate) hängt exponentiell von dem erreichten Unterpotential ab, in diesem Fall von der Umladespannung $U_D$ in der Doppelschicht. Dies ist für typische Parameter ebenfalls in Fig. 11 eingezeichnet. Bereits in einer Entfernung von 4 µm von der Werkzeugkante ist die Cu-Auflöserate auf 1/1000 der Ätzrate im schmalen Spalt abgesunken. Mit größer werdender Entfernung sinkt sie weiter exponentiell ab. Im Verlauf eines Experimentes mit 50 ns langen und 1,5 V hohen Pulsen stoppt also de facto das Ätzen des Cu-Films wenige um von der Werkzeugkante entfernt. Dies steht im Einklang mit den in den Figuren 8 und 9 veranschaulichten experimentellen Ergebnissen.

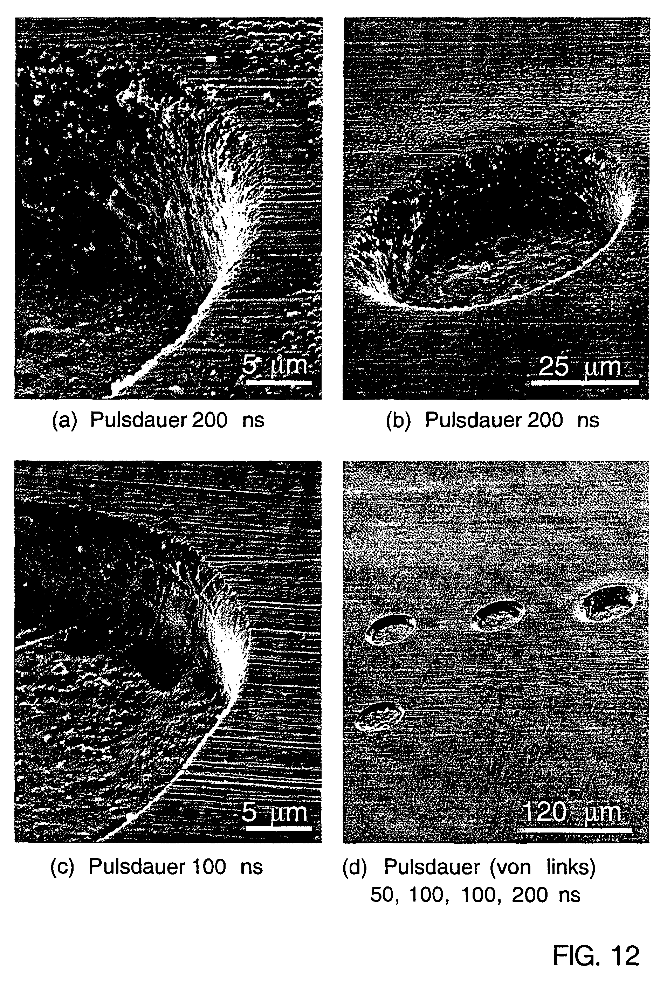

Die Fig. 12 zeigt in Bildern (a) bis (d) elektronenmikroskopische Aufnahmen der Ergebnisse von Experimenten, bei denen das Werkstück ein mechanisch poliertes Cu-Blech (anstelle des in der oben beschriebenen Weise hergestellten Cu-Films) war. Als Elektrolyt fand 0,1 M HClO$_4$ / 0,05 M CuSO$_4$ Verwendung. Der Zusatz von Cu$^{2+}$ sollte die Einstellung des Redoxpotentials von Cu/Cu$^{2+}$ erleichtern, ist aber nicht unbedingt nötig. Es wurde auch hier das anhand der Fig. 7 beschriebene bipotentiostatische Regelungssystem verwendet. Die Potentiale waren die selben wie bei den Experimenten, deren Ergebnisse in Bildern (a) und (b) der Fig. 8 gezeigt sind. Es wurden jeweils insgesamt 10$^9$ Pulse in 10 Minuten Dauer angelegt. Die Werkzeugelektrode, ein Draht aus Platin (Pt) mit einem Durchmesser von 50 µm, wurde durch langsames Vorschieben der absoluten Position in das Werkstück gesenkt, unter lokaler Abtragung des Werkstückmaterials. Von Zeit zu Zeit wurde der Arbeitsspalt durch kurzes Zurückziehen der Werkzeugelektrode gespült. Mit dieser Methode lassen sich dreidimensionale Strukturen mit scharfen Kanten, definierten Lochböden und hohem Aspektverhältnis herstellen, wie die Bilder (a) bis (d) in Fig. 10 deutlich zeigen. Im einzelnen zeigen die Bilder (a) und (b) in unterschiedlicher Vergrößerung das Ergebnis bei Verwendung von 200 ns breiten Pulsen. Das Bild (c) zeigt das Ergebnis bei Verwendung von 100 ns breiten Pulsen, und das Bild (d) zeigt zum Vergleich in einer Gesamtaufnahme die Ergebnisse für verschiedene Pulsbreiten von 50 ns, 100 ns (2 Vertiefungen) und 200 ns (von links nach rechts). Die Vorschubgeschwindigkeit ließe sich noch optimieren, indem man den Abstand zwischen Werkzeug und Werkstück so regelt, wie weiter oben anhand der Fig. 6 beschrieben. D.h., die abstandsabhängige Umladestromspitze des Elektrodenstroms wäre über einen Spitzendetektor zu messen und mit einem Sollwert zu vergleichen. Der Arbeitsspalt bliebe dann immer optimal.

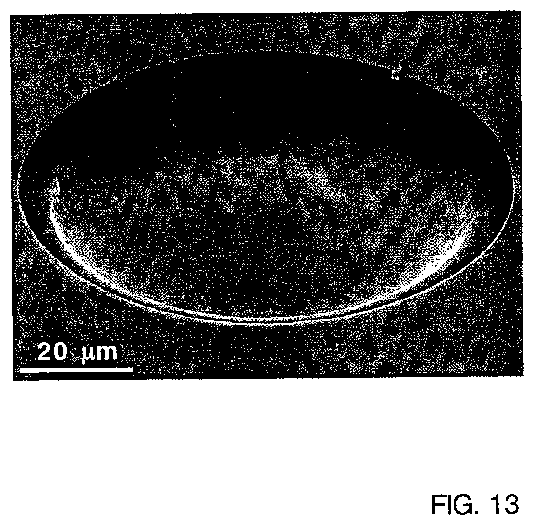

Die Methode kann prinzipiell auf alle elektrochemisch ätzbaren Materialien angewendet werden. So gelang die Bearbeitung von dotiertem Silicium. Hierbei sind die Auswahl des geeigneten Elektrolyten, in dem das entsprechende Silicium elektrochemisch oxidierbar ist, und die genaue Potentialkontrolle die wesentliche Herausforderung. Hoch dotiertes n- und p-Silicium und normal dotiertes p-Silicium waren in 1% HF bearbeitbar. Die für den elektrochemischen Prozeß umzuladende Kapazität und die Leitfähigkeit des Siliciums sind je nach Dotierung des Siliciums um mehrere Größenordnungen kleiner als die eines Metalls. Die geringere Kapazität bedeutet kleinere typische Ladezeitkonstanten bei sonst gleichen Parametern und somit geringere Ortsauflösung. Die Leitfähigkeit des Materials darf nicht wesentlich kleiner als die Leitfähigkeit des Elektrolyten sein, da sonst die Abstandsabhängigkeit des Elektrolytwiderstandes für die Umladung der Doppelschicht irrelevant wird. Eventuell sind nichtwäßrige Elektrolyten anzuwenden. Die Fig. 13 zeigt in elektronenmikroskopischer Aufnahme ein in p-dotiertes Silicium(111) in 1% HF in H$_2$O/CH$_3$OH (50: 50) geätztes Loch, unter Anwendung des anhand der Fig. 7 beschriebenen Aufbaus mit bipotentiostatischer Regelung. Die Pulsbreite betrug hier 400 ns, die Pulshöhe war 0,5 V, und als Werkzeugelektrode wurde ein Pt-Draht mit einem Durchmesser von 50 um verwendet.

Ebenso wie zur lokalen Materialabtragung (Ätzen) kann das erfindungsgemäße Verfahren auch zur lokalen Metallabscheidung angewendet werden. Auch hier läßt sich insbesondere die bipotentiostatische Regelung, wie sie oben anhand der Fig. 7 beschrieben wurde, mit Vorteil nutzen. Bei diesbezüglichen Versuchen mittels des in Fig. 7 gezeigten Aufbaus wurde als Substrat (also als "Werkstück") ein Film aus Gold (Au) und als Werkzeugelektrode ein Draht aus Platin (Pt) mit einem Durchmesser von 50 µm verwendet. Als Elektrolyt wurde 0,1 M CuSO$_4$ / 0,01 M HClO$_4$ verwendet. Das Potential des Au-Films wurde auf ungefähr das Cu/Cu$^{2+}$-Redoxpotential eingestellt. Wie oben bereits erwähnt, findet bei diesem Potential während der Versuchsdauer keine merkliche großflächige Cu-Abscheidung statt. Die Werkzeugelektrode wurde zwischen 1 µm und 4 µm vor der Oberfläche des Au-Films positioniert. Dies erfolgte durch kontrolliertes Zurückziehen des Verschiebetisches vom Abstandsnullpunkt, der durch das Auftreten eines Tunnelstroms zwischen Werkzeugelektrode und Werkstück gemessen wurde. Das Potential der Werkzeugelektrode betrug 500 mV bezogen auf das Redoxpotential von Cu/Cu$^{2+}$.

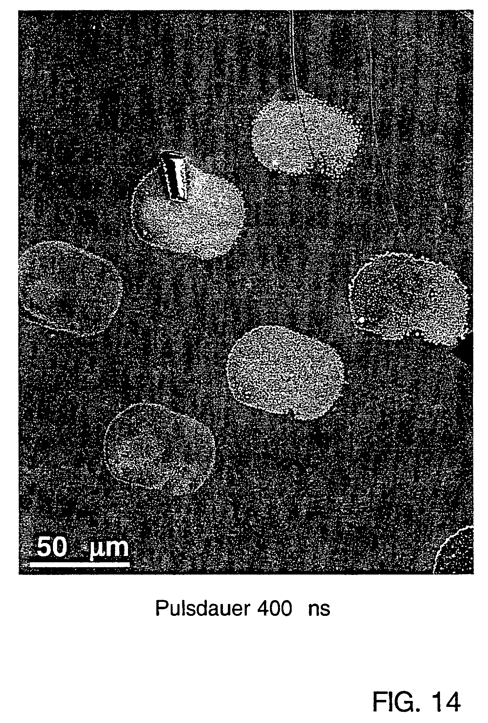

Zwischen Werkstück und Werkzeugelektrode wurden 400 ns lange, 2 V hohe Pulse angelegt, und zwar so, daß das Werkstück durch die Pulse negativ gegenüber der Werkzeugelektrode polarisiert wurde. Das Tastverhältnis betrug 1:100, um die Cu-Abscheidung aus dem Elektrolyten zu verlangsamen und während der Abscheidung von Cu den Elektrolyten im Arbeitsspalt nicht zu stark zu verarmen. Nach Erreichen eines Kurzschlusses durch das abgeschiedene Cu wurde die Werkzeugelektrode zurückgezogen, und die Pulse wurden abgeschaltet. Die Fig. 14 ist eine elektronenmikroskopische Aufnahme, die in der Draufsicht das lokal unter der Werkzeugelektrode abgeschiedene Cu, wie es in aufeinanderfolgenden Experimenten bei unterschiedlichen Abständen zwischen Werkstück und Werkzeugelektrode erzeugt wurde.

Das erfindungsgemäße Verfahren ist prinzipiell auf alle elektrochemisch aktiven Systeme anwendbar. Wesentliche Voraussetzung für das Ätzen ist die im Vergleich zur Materialauflösung nur langsam ablaufende Rückabscheidung aufgelösten Materials. Außerdem darf die Oberfläche nicht stark passiviert werden, was die Reaktionsraten inakzeptabel erniedrigen würde. Beides ist z.B. für das Ätzen von Silicium in sauren, fluoridhaltigen Elektrolyten erfüllt: der niedrige pH-Wert verhindert die Passivierung der Oberfläche durch Oxidbildung; der Fluoridzusatz sorgt für eine nur teilweise reversible Si-Oxidation, was die Rückabscheidung von Si verhindert.

Für die umgekehrte Reaktion, also die lokale Abscheidung von ionisch im Elektrolyten gelöstem Material oder sogar von Material, das während der Reaktion von der Werkzeugelektrode abgelöst wird, ist wesentliche Voraussetzung, daß die abgeschiedenen Strukturen während des Anliegens der Ruhespannung stabil bleiben. Durch entsprechende Bemessung der Ruhespannung kann dies sichergestellt werden, wie das in Fig. 14 dargestellte Versuchsergebnis zeigt. Weiterhin ist es in bestimmten Fällen möglich, daß auch bei Ruhepotentialen positiv gegenüber dem Nernst-Potential der Metallabscheidung Ätzerscheinungen, also die Zersetzung der Strukturen, gehemmt werden. In der Tat wurde für sehr kleine Cu-Cluster auf Au beobachtet, daß diese auch oberhalb des Nernst-Potentials stabil bleiben. Auch Ruhepotentiale niedriger als das Nernst-Potential sind für bestimmte Systeme möglich: Häufig ist die Metallabscheidung durch eine Nukleationsbarriere gehemmt. Nur während des Spannungspulses wird diese Barriere dann lokal überschritten. Die Metallabscheidung findet dann in diesen Bereichen statt.

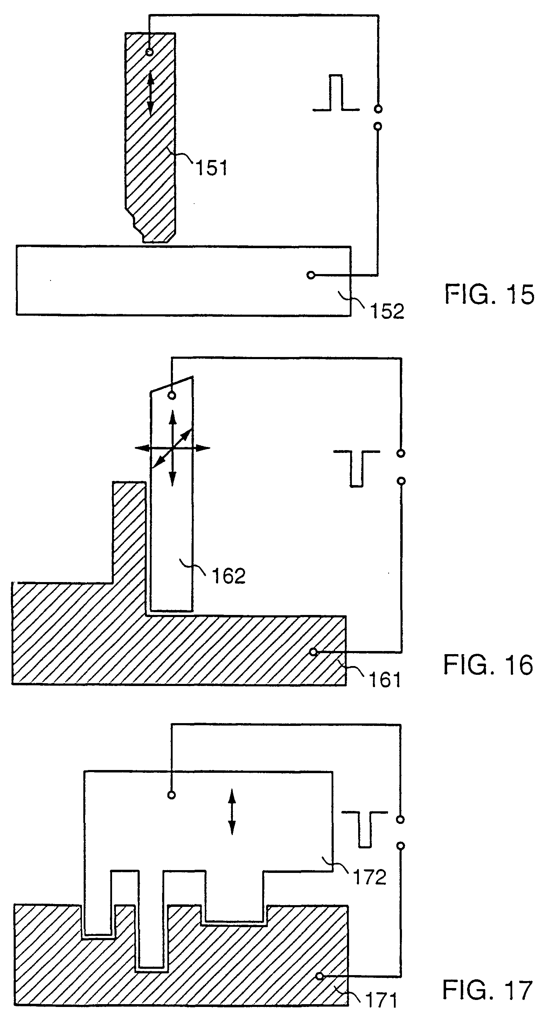

Durch Wahl der Elektrodengeometrie und/oder durch ein-, zweioder dreidimensionale Relativbewegung zwischen Werkstück und Werkzeugelektrode nach einem ausgewählten Programm können mit dem erfindungsgemäßen Verfahren beliebige Strukturen mit kleinster Auflösung geschaffen werden, sei es durch elektrochemische Materialabtragung oder durch elektrochemische Abscheidung. Einige Beispiele für mögliche Elektrodengeometrien zum selektiven Ätzen sind in den Figuren 15, 16 und 17 schematisch gezeigt. Die Fig. 15 veranschaulicht noch einmal das weiter oben diskutierte Beispiel, bei dem ein Kupferdraht 151 mit Hilfe einer flachen Werkzeugelektrode 152 abgeplattet wurde. Die Fig. 16 veranschaulicht die dreidimensionale Bearbeitung eines Werkstückes 161 mit einer Werkzeugelektrode 162, die analog einem Fräser in drei Raumrichtungen beweglich ist. Die Fig. 17 veranschaulicht eine dreidimensionale Bearbeitung durch den Abdruck eines Stempels, wobei die Stirnseiten diskreter Abschnitte einer als Stempel geformten Werkzeugelektrode 172 in ein Werkstück 171 gesenkt werden. Die Polarität des Spannungspulses ist bei allen diesen Beispielen, wie gezeigt, am Werkstück positiv gegenüber der Werkzeugelektrode, was im allgemeinen Materialabtrag am Werkstück bedeutet.

Der Vorschub kann in allen Fällen und in jeder Raumrichtung wie beim früher beschriebenen Beispiel jeweils über die Amplitude der Elektrodenstromspitzen geregelt werden, beispielsweise mittels des in Fig. 6 (bzw. Fig. 7) gezeigten Regelkreises. Allerdings ist auch ein Arbeiten mit konstantem Vorschub möglich; es stellt sich dann die Reaktionsrate gemäß dem Arbeitsspalt ein. Eventuell ist der Elektrolyt im Arbeitsspalt von Zeit zu Zeit durch kurzzeitiges Zurückziehen der Werkzeugelektrode zu spülen.

Die Erfindung wurde vorstehend anhand von Ausführungsformen erläutert, bei denen die angelegte Spannung aus einer Folge rechteckiger Pulse über einem definierten Ruhepegel besteht. Das erfindungsgemäße Verfahren ist jedoch nicht hierauf beschränkt, sondern läßt sich erfolgreich auch mit anderen Wellenformen einer pulsierenden oder alternierenden Spannung durchführen. Verallgemeinert, ohne Beschränkung auf eine spezielle Wellenform, lautet die Vorschrift für ein erfindungsgemäßes Verfahren:

    i. das zeitliche Mittel der angelegten Spannung muß einen Wert innerhalb desjenigen Bereiches der Systemkennlinie haben, in welchem kein merklicher Reaktionsstrom fließt;

    ii. die relativ zu diesem Mittelwert gemessenen Ausschläge der angelegten Spannung sind in ihrer Amplitude, ihrer jeweiligen Dauer und ihres Zeitabstandes derart zu dimensionieren, daß die elektrochemische Doppelschicht zumindest am Werkstück und dort nur in Ortsbereichen, die nicht weiter als eine gewählte Maximaldistanz $d_{max}$ von der Werkzeugelektrode entfernt liegen, zwischen zwei Ladespannungen umgeladen wird, von denen zumindest eine zur Herbeiführung der gewünschten Reaktion ausreicht;

    iii. die Geometrie des Zwischenraumes zwischen den beiden Elektroden ist so zu bemessen, daß nur die Punkte der zu bearbeitenden Zone innerhalb der genannten Maximaldistanz $d_{max}$ liegen.

Die Dimensionierung der Wellenform der angelegten Spannung kann teilweise unter Zuhilfenahme der Systemkennlinie erfolgen, also der Strom/Spannungskurve des Elektroden-Elektrolyt-Systems, die für gegebene Elektrodenmaterialien und Elektrolytzusammensetzungen unter statischen Bedingungen an einer Referenzzelle aufgenommen werden kann. Im Hinblick auf Fig. 3 bedeutet dies, daß die positiv gerichteten (also nach rechts gehenden) Ausschläge der Spannung merklich über $U_{rkt}$ hinausgehen müssen. Der Mittelwert der angelegten Spannung muß im Bereich links von $U_{rkt}$ liegen. Dementsprechend sind die Amplitude der nach links gehenden Ausschläge, also der entgegengesetzte Extremwert der Spannung, sowie die Form und relative Dauer und Zeitabstände der Ausschläge zu bemessen (steuerbar z.B. über die Wiederholfrequenz, wenn Form und Dauer eines der Ausschläge vorgegeben ist). Innerhalb dieser Rahmenbedingungen sind die genannten

Parameter so einzustellen, daß die Maximaldistanz $d_{max}$ für die Orte der erstrebten Doppelschichtumladung definiert wird. Letzteres kann im Falle von Rechteckpulsen rechnerisch nach den obigen mathematischen Beziehungen (2) bzw. (3) oder andernfalls experimentell durch Beobachtung der kapazitiven Komponente des Elektrodenstroms erfolgen.

Enthält die Wellenform der angelegten pulsierenden Spannung keine scharfen Pulsflanken, dann ergeben sich keine ausgeprägten kapazitiven Ladespitzen des Elektrodenstroms bei der Doppelschichtumladung. Die kapazitive Komponente des Elektrodenstroms, welche das Stattfinden der erstrebten Doppelschichtumladung anzeigt, äußert sich dann in einer andersartigen Verzerrung des Ladestroms gegenüber der Spannungswellenform. Bei sinusförmiger Pulsierung der angelegten Spannung beispielsweise führt die Umladung dazu, daß der Elektrodenstrom eine Phasenverschiebung gegenüber der Spannung erhält, wobei das Maß dieser Verschiebung eine Anzeige für die kapazitive Komponente ist.

So kann zur Verifizierung der erstrebten Doppelschichtumladung die kapazitive Komponente des Elektrodenstroms allgemein dadurch gemessen werden, daß man die Wellenform des Elektrodenstroms mit derjenigen der angelegten Spannung vergleicht, etwa durch subtraktive Verknüpfung eines der angelegten Spannung entprechenden Signals mit der Spannung, die an einem passend geeichten Strommeßwiderstand abfällt. Im Prinzip ist zur Verifizierung der Doppelschichtumladung jede Art von Blindstrommessung anwendbar. Eine entsprechend ausgestaltete Meßvorrichtung kann auch im Regelkreis nach Fig. 6 anstelle des dort gezeigten Spitzendetektors 64 verwendet werden.

Will man vermeiden, daß an irgendwelchen Stellen der zu bearbeitenden Zone eine die Doppelschichtumladung hindernde Ladungsträgerverarmung stattfindet, dann darf der Zwischenraum zwischen den Elektroden an der zu bearbeitenden Zone nirgendwo zu eng sein. In diesem Fall ist für den Elektrodenabstand eine Untergrenze $d_{min}$ zu setzen. Zur Bemessung dieser Untergrenze kann man sich etwa auf folgende Erkenntnis stützen: Zum Umladen der Doppelschicht und zum Starten der Reaktion wird ca. 1/10 Monolage an einwertigen Ionen aus dem Elektrolyten in der Doppelschicht angelagert. Bei einem 1 M Elektrolyten, der z.B. KCl gelöst in $H_2O$ enthält, ist ca. jedes fünfzigste Teilchen ein Salzion einer Ladungssorte. Zur Adsorption von 1/10 Monolage wird somit ein Lösungsmittelfilm von ca. 5 Lösungsmittelmolekülschichten Dicke vollständig entleert. Bei $H_2O$ entspricht dies ca. 1,5 nm Schichtdicke. Um die Verarmung zu vermeiden, muß also der Mindestabstand größer als dieser Wert sein. Im allgemeinen wird es genügen, für die Untergrenze $d_{min}$ des Elektrodenabstandes einen Wert in der Größenordnung von 1 nm zu wählen. Die Einstellung derart geringer Abstände kann in üblicher Weise beispielsweise durch definiertes Zurückfahren aus dem Berührungszustand erfolgen, z.B. mit piezoelektrischen Stellelementen nach Tunnelstrommessung, wie weiter oben beschrieben.

Spezielle technische Maßnahmen zur Einhaltung eines Mindestabstandes sind jedoch nicht in jedem Falle erforderlich. Insbesondere beim elektrochemischen Senken nach dem erfindungsgemäßen Verfahren, wie es oben anhand der Fig. 17 beschrieben wurde, kann man davon ausgehen, daß selbst bei Berührung von Werkstück und Werkzeugelektrode nur wenige winzige Punkte engeren Kontakt als das erwähnte $d_{min}$ haben. Dies ist wegen der (auf atomarer Skala) rauhen Beschaffenheit der Elektrodenoberfläche zu erwarten. Der überwiegende Teil der Werkzeugelektrode wird immer noch weit genug von der Werkstückoberfläche entfernt bleiben, um den Materialabtrag unter erfindungsgemäßer Umladung der Doppelschicht zu erhalten. Dies setzt natürlich entsprechend hohen Kontaktwiderstand zwischen Werkstück und Werkzeug voraus. Dann wird durch die wenigen Kontaktpunkte die Stromkurve der Doppelschichtumladung insgesamt nur unmerklich beeinflußt. Die Werkzeugelektrode senkt sich also in das Werkstück ein, wobei der Materialabtrag überwiegend durch ungehinderte Doppelschichtumladung erfolgt und nur die Kontaktpunkte eventuell nach dem weiter oben erwähnten vorveröffentlichten Verarmungsverfahren geätzt werden.

Versuche mit einem Werkstück aus p-Silicium in 2%-iger Flußsäure mit einem Pt-Ir-Draht als Werkzeugelektrode haben bestätigt, daß das Senken unter Berührung tatsächlich funktioniert. So kann das erfindungsgemäße Verfahren zum strukturierten Ätzen kleinster Muster in eine Werkstückoberfläche angewandt werden, indem man einen entsprechend strukturierten Stempel unter gewissem Auflagedruck einfach in das Werkstück sinken läßt, bis die gewünschte Ätztiefe erreicht ist. Es ist lediglich darauf zu achten, daß der Auflagedruck gering genug ist, um einen hohen Kontaktwiderstand zu bewahren.

Das erfindungsgemäße Verfahren bereichert die Technik der elektrochemischen Materialbearbeitung, welche per se schon die Vorzüge hat, eine Formgestaltung ohne mechanische und thermische Belastung, ohne Zerstörung des Oberflächengefüges, ohne die Gefahr einer Gesamtverformung kleiner Werkstücke und meist auch ohne Werkzeugverschleiß zu erlauben. Dank der Erfindung wird die Präzision und das Auflösungsvermögen elektrochemischer Bearbeitung verbessert. Durch Verkürzung der Pulsdauer und Verringerung der Elektrolytkonzentration dürfte die Präzision bis auf das Niveau lithografischer Standardverfahren gesteigert werden können. Die in Fig. 17 veranschaulichte Senkung eines Stempels eröffnet auch die Möglichkeit einer gleichzeitigen Bearbeitung vieler Werkstücke oder Werkstückabschnitte. Dies kann zur Strukturierung ganzer Halbleiterwafer angewandt werden. Lithographie und Ätzschritt können hier durch einen Bearbeitungsschritt ersetzt werden. Ferner ist die Senkung unabhängig von der kristallografischen Struktur des Werkstükkes. Das erfindungsgemäße Verfahren eröffnet also erstmals einen Weg zur wirklich dreidimensionalen Bearbeitung in kleinster Strukturierung.

**Patentansprüche**

1. Verfahren zur Bearbeitung eines Werkstückes durch eine gewünschte elektrochemische Reaktion,
   wobei zumindest derjenige Teil des Werkstückes, der die zu bearbeitende Zone enthält, als Werkstückelektrode innerhalb eines Elektrolyten im Abstand zu einer Werkzeugelektrode angeordnet wird und zwischen diese beiden Elektroden eine pulsierende oder alternierende elektrische Spannung gelegt wird,
   **dadurch gekennzeichnet,**
   **daß** das zeitliche Mittel der angelegten Spannung einen Wert innerhalb desjenigen Bereiches der Systemkennlinie hat, in welchem kein merklicher Reaktionsstrom fließt;
   **daß** die relativ zu diesem Mittelwert gemessenen Ausschläge der angelegten Spannung in ihrer Amplitude, ihrer jeweiligen Dauer und ihres Zeitabstandes derart dimensioniert sind, daß die elektrochemische Doppelschicht zumindest am Werkstück und dort nur in Ortsbereichen, die nicht weiter als eine gewählte Maximaldistanz $d_{max}$ von der Werkzeugelektrode entfernt liegen, periodisch zwischen zwei Ladespannungen umgeladen wird, von denen zumindest eine zur Herbeiführung der gewünschten Reaktion ausreicht;
   **daß** die Geometrie des Zwischenraumes zwischen den beiden Elektroden so bemessen wird, daß nur die Punkte der zu bearbeitenden Zone innerhalb der genannten Maximaldistanz $d_{max}$ liegen.

2. Verfahren nach Anspruch 1, **dadurch gekennzeichnet, daß** die Entfernung jedes Punktes der zu bearbeitenden Zone von der Werkzeugelektrode innerhalb eines Bereiches liegt, bei welchem der Elektrodenstrom eine deutlich meßbare kapazitive Komponente hat.

3. Verfahren nach Anspruch 2, **dadurch gekennzeichnet, daß** während der Bearbeitung die kapazitive Komponente des Elektrodenstroms als Regelgröße in einem den Abstand zwischen Werkzeugelektrode und Werkstück steuernden Regelkreis verwendet wird.

4. Verfahren nach Anspruch 1, **dadurch gekennzeichnet,**
   **daß** die angelegte elektrische Spannung eine Folge von Pulsen mit der Breite $t_p$ und mit einer die gewünschte elektrochemische Reaktion ermöglichenden Maximalspannung $U_p$ über einem Ruhepegel $U_0$ bildet,
   und **daß** die Größen $U_0$, $U_p$, und $t_p$, der Pulsabstand und die Geometrie des Zwischenraumes zwischen der Werkzeugelektrode und Werkstück derart bemessen werden, daß die Entfernung d jedes Punktes der zu bearbeitenden Zone von der Werkzeugelektrodenoberfläche innerhalb eines Bereiches liegt, bei welchem der Elektrodenstrom deutlich meßbare kapazitive Lade- und Rückladespitzen zeigt.

5. Verfahren nach Anspruch 1, **dadurch gekennzeichnet,**
   **daß** die angelegte elektrische Spannung eine Folge von Pulsen mit der Breite tp und mit einer die gewünschte elektrochemische Reaktion ermöglichenden Maximalspannung $U_p$ über einem Ruhepegel $U_0$ bildet,
   und **daß** die Größen $U_0$, $U_p$, $t_p$ und der spezifische Widerstand r des Elektrolyten so dimensioniert werden, daß die folgende Bedingung gegeben ist:

$$U_0 + (U_p - U_0) \cdot \{1 - \exp[-t_p/(r \cdot c \cdot d_{max})]\} = U_{rkt}$$

mit

c = elektrische Kapazität pro Flächeneinheit der Doppelschichten in Serie,
$U_{rkt}$ = Schwellspannung zwischen den Elektroden, ab welcher eine merkliche materialbearbeitende elektrochemische Reaktion stattfindet.

6. Verfahren nach Anspruch 1, **dadurch gekennzeichnet,**

**daß** die angelegte elektrische Spannung eine Folge von Pulsen mit der Breite $t_p$ und mit einer die gewünschte elektrochemische Reaktion ermöglichenden Maximalspannung $U_p$ über einem Ruhepegel $U_0$ bildet;

**daß** $U_p$-$U_0$ weniger als doppelt so hoch ist wie die Mindesthöhe, ab welcher eine merkliche materialbearbeitende elektrochemische Reaktion stattfindet,

und **daß** $t_p$ und der spezifische Widerstand r des Elektrolyten so dimensioniert werden, daß

$$t_p \approx r \cdot c \cdot d_{max}$$

mit

c = elektrische Kapazität pro Flächeneinheit der Doppelschichten in Serie.

7. Verfahren nach einem der Ansprüche 4 bis 6, **dadurch gekennzeichnet, daß** die Spannungspulse im wesentlichen rechteckförmig sind.

8. Verfahren nach einem der Ansprüche 4 bis 7, **dadurch gekennzeichnet, daß** während der Bearbeitung die Spitzenamplitude des Ladestroms der Doppelschicht als Regelgröße in einem den Abstand zwischen Werkzeugelektrode und Werkstück steuernden Regelkreis verwendet wird.

9. Verfahren nach einem der Ansprüche 1 bis 3, **dadurch gekennzeichnet, daß** die angelegte Spannung sinusförmigen Verlauf hat.

10. Verfahren nach einem der vorhergehenden Ansprüche, **dadurch gekennzeichnet, daß** der sich zwischen den Ausschlägen der angelegten Spannung einstellende Ruhepegel durch potentiostatische Regelung auf einem Wert gehalten wird, bei dem die gewünschte Reaktion nicht merklich stattfindet.

11. Verfahren nach Anspruch 10, **dadurch gekennzeichnet, daß** sowohl das elektrochemische Potential der Werkstückelektrode als auch das elektrochemische Potential der Werkzeugelektrode bezüglich einer im Elektrolyten befindlichen Referenzelektrode über eine im Elektrolyten befindliche Gegenelektrode durch ein Regelungssystem mit Tiefpaßverhalten bipotentiostatisch auf Sollwerte geregelt wird, bei denen an der Werkstückelektrode die gewünschte Reaktion nicht merklich stattfindet und an der Werkzeugelektrode Nebenreaktionen ausreichend unterbunden sind.

12. Verfahren nach einem der vorhergehenden Ansprüche, **dadurch gekennzeichnet, daß** das zu bearbeitende Werkstück ein Material ist, welches aus dem bei der Bearbeitung verwendeten Elektrolyten vor dem Anlegen der die Bearbeitung bewirkenden Spannung abgeschieden wurde.

13. Verfahren nach einem der vorhergehenden Ansprüche, **gekennzeichnet durch** derartige Bemessung der Geometrie des Zwischenraumes zwischen den Elektroden, daß zwischen der zu bearbeitenden Zone und der Werkzeugelektrode ein Mindestabstand von mehr als 1 nm eingehalten wird.

14. Vorrichtung zur Bearbeitung eines Werkstückes durch eine gewünschte elektrochemische Reaktion, enthaltend:

eine Einrichtung (68; 78) zum Halten zumindest desjenigen Teils eines Werkstückes, der die zu bearbeitende Zone enthält, als Werkstückelektrode (61; 71) innerhalb eines Elektrolyten in regelbarem Abstand zu einer Werkzeugelektrode (62; 72) und zum Herbeiführen eines Vorschubes zwischen den beiden Elektroden in der gewünschten Richtung der Bearbeitung innerhalb des Elektrolyten

und eine Einrichtung (88) zum Anlegen einer pulsierenden oder alternierenden elektrischen Bearbeitungsspannung zwischen die beiden Elektroden,

**gekennzeichnet durch**

eine derartige Ausbildung der Werkzeugelektrode (62; 72), daß zwischen beiden Elektroden ein Zwischenraum mit einer Geometrie herstellbar ist, bei welcher nur die Punkte der zu bearbeitenden Zone innerhalb einer Maximaldistanz $d_{max}$ von der Werkzeugelektrode liegen;

eine Einrichtung (80-86) zum Einstellen des zeitlichen Mittelwertes der Bearbeitungsspannung auf einen Wert innerhalb desjenigen Bereiches der Systemkennlinie, bei dem die gewünschte elektrochemische Reaktion nicht merklich stattfindet;

eine Einrichtung (87) zum Einstellen der relativ zu diesem Mittelwert gemessenen Ausschläge der Arbeitsspannung in ihrer Amplitude, ihrer jeweiligen Dauer und ihrem Zeitabstand derart, daß die elektrochemische Doppelschicht zumindest am Werkstück und dort nur in Ortsbereichen, die nicht weiter als die Maximaldistanz $d_{max}$ von der Werkzeugelektrode entfernt liegen, periodisch zwischen zwei Ladespannungen umgeladen wird, von denen zumindest eine zur Herbeiführung der gewünschten Reaktion ausreicht.

**15.** Vorrichtung nach Anspruch 14, **gekennzeichnet durch** einen Regelkreis (63-67) mit einer Einrichtung (63, 64) zum Messen einer Größe, die charakteristisch für die kapazitive Komponente des **durch** die Bearbeitungsspannung hervorgerufenen Elektrodenstroms ist, und mit einer Einrichtung (67) zur Beeinflussung der den Vorschub herbeiführenden Einrichtung (68; 78) im Sinne einer Regelung der gemessenen Größe auf einen gewählten Sollwert.

**16.** Vorrichtung nach Anspruch 15, **dadurch gekennzeichnet, daß** der Regelkreis einen Spitzendetektor (64) aufweist, der ausgelegt ist zum Messen der Spitzenamplitude der einen oder der anderen Polarität des Elektrodenstroms oder zum Messen der Spitze-Spitze-Amplitude des Elektrodenstroms.

**17.** Vorrichtung nach einem der Ansprüche 14 bis 16, **dadurch gekennzeichnet, daß** die Einrichtung (80-86) zum Einstellen des zeitlichen Mittelwertes der Bearbeitungsspannung ein potentiostatisches Regelungssystem aufweist zum Halten des sich zwischen den Ausschlägen der Berabeitungsspannung einstellenden Ruhepegels auf einem Wert, bei dem die gewünschte elektrochemische Reaktion nicht merklich stattfindet.

**18.** Vorrichtung nach Anspruch 17, **dadurch gekennzeichnet, daß** das potentiostatische Regelungssystem (80-86) folgendes enthält:

eine Referenzelektrode (80) und eine Gegenelektrode (81), die im Bereich des Elektrolyten angeordnet sind; einen ersten Regelkreis (82-85) mit Tiefpaßverhalten zum bipotentiostatischen Regeln des elektrochemischen Potentials der Werkstückelektrode (71) bezüglich der Referenzelektrode über die Gegenelektrode auf einen Sollwert, bei dem an der Werkstückelektrode die gewünschte Reaktion nicht merklich stattfindet; einen zweiten Regelkreis (82, 86) mit Tiefpaßverhalten zum bipotentiostatischen Regeln des elektrochemischen Potentials der Werkzeugelektrode (72) bezüglich der Referenzelektrode über die Gegenelektrode auf einen Sollwert, bei dem an der Werkzeugelektrode Nebenreaktionen ausreichend unterbunden sind.

## Claims

**1.** Method for processing a workpiece by means of a desired electrochemical reaction, wherein at least that part of the workpiece which contains the area to be processed is arranged as a workpiece electrode within an electrolyte at a distance from a tool electrode and a pulsating or alternating electrical voltage is applied between these two electrodes,
**characterised in that**
the time mean of the applied voltage has a value within the range of the system characteristic curve in which no noticeable reaction current flows;
that the deflections, measured relative to this mean value, of the applied voltage are dimensioned in their amplitude, their respective duration and their time interval such that the electrochemical double layer, at least at the workpiece and there only in the areas which are no further away from the tool electrode than a selected maximum distance $d_{max,}$ is charge reversed periodically between two charge voltages, of which at least one is sufficient to bring about the desired reaction;
that the shape of the space between the two electrodes is dimensioned such that only the points of the area to be processed lie within the said maximum distance $d_{max}$.

**2.** Method according to Claim 1, **characterised in that** the distance of each point of the area to be processed from the tool electrode lies within a range in which the electrode current has a clearly measurable capacitive component.

**3.** Method according to Claim 2, **characterised in that** during the processing the capacitive component of the electrode current is used as a control variable in a control circuit which controls the distance between the tool electrode and the workpiece.

4. Method according to Claim 1, **characterised in that** the applied electrical voltage forms a sequence of pulses with the width $t_p$ and with a maximum voltage $U_p$, which renders possible the desired electrochemical reaction, over a rest level $U_o$,
and that the variables $U_o$; $U_p$, and $t_p$, the pulse spacing and the shape of the space between the tool electrode and the workpiece are dimensioned in such a manner that the distance d of each point of the area to be processed from the tool electrode surface is within a range in which the electrode current clearly indicates measurable capacitive charging and reverse charging peaks.

5. Method according to Claim 1, **characterised in that** the applied electrical voltage forms a sequence of pulses with the width $t_p$ and with a maximum voltage $U_p$, which renders possible the desired electrochemical reaction, over a rest level $U_o$,
and that the variables $U_o$; $U_p$, and $t_p$ and the specific resistance r of the electrolyte are dimensioned such that the following condition is created:

$$U_o + (U_p - U_o) \cdot \{1 - \exp[-t_p/(r \cdot c \cdot d_{max})]\} = U_{rkt}$$

where

c = electrical capacitance per area unit of the double layers in series,
$U_{rkt}$ = threshold voltage between the electrodes, above which a noticeable material-processing electrochemical reaction takes place.

6. Method according to Claim 1, **characterised in that** the applied electrical voltage forms a sequence of pulses with the width $t_p$ and with a maximum voltage $U_p$, which renders possible the desired electrochemical reaction, over a rest level $U_o$,
that $U_p - U_o$ is less than twice as high as the minimum level above which a noticeable material-processing electrochemical reaction occurs,
and that $t_p$ and the specific resistance r of the electrolyte are dimensioned such that

$$t_p \approx r \cdot c \cdot d_{max}$$

where

c = electrical capacitance per area unit of the double layers in series.

7. Method according to any one of Claims 4 to 6, **characterised in that** the voltage pulses are substantially rectangular in shape.

8. Method according to any one of Claims 4 to 7, **characterised in that** during the processing the peak amplitude of the charging current of the double layer is used as a control variable in a control circuit which controls the distance between the tool electrode and the workpiece.

9. Method according to any one of claims 1 to 3, **characterised in that** the applied voltage has a sinusoidal curve.

10. Method according to any one of the preceding claims, **characterised in that** the rest level to be set between the deflections of the applied voltage is held by means of a potentiostatic control at a value at which the desired reaction does not noticeably occur.

11. Method according to Claim 10, **characterised in that** both the electrochemical potential of the workpiece electrode and also the electrochemical potential of the tool electrode with respect to a reference electrode located in the electrolyte are adjusted by way of a counter electrode located in the electrolyte to the desired values in a bi-potentiostatic manner by means of a control system with a low-pass filter behaviour, at which desired values the desired reaction does not noticeably occur at the workpiece electrode and side reactions are sufficiently prevented at the tool electrode.

12. Method according to any one of the preceding claims, **characterised in that** the workpiece to be processed is a material which was deposited from the electrolyte used during the processing prior to applying the voltage which effects the processing.

13. Method according to any one of the preceding claims, **characterised by** dimensioning the shape of the space between the electrodes such that a minimum distance of more than 1 nm is maintained between the area to be processed and the tool electrode.

14. Apparatus for processing a workpiece by means of a desired electrochemical reaction, including:

   a device (68; 78) for holding at least that part of a workpiece, which contains the area to be processed, as a workpiece electrode (61; 71) within an electrolyte at an adjustable distance from a tool electrode (62; 72) and for bringing about an advancement between the two electrodes in the desired processing direction within the electrolyte
   and a device (88) for applying a pulsating or alternating electrical processing voltage between the two electrodes,

   **characterised by**
   formation of the tool electrode (62; 72) such that between the two electrodes an intermediate space can be produced of such a shape that only the points of the area to be processed lie within a maximum distance $d_{max}$ from the tool electrode;
   a device (80-86) for adjusting the time mean of the processing voltage to a value within that range of the system characteristic curve in which the desired electrochemical reaction does not noticeably occur;
   a device (87) for adjusting the deflections, measured relative to this mean value, of the working voltage in their amplitude, their respective duration and their time interval such that the electrochemical double layer, at least at the workpiece and there only in the areas which are no further away from the tool electrode than the selected maximum distance $d_{max}$, is charge reversed periodically between two charge voltages, of which at least one is sufficient to bring about the desired reaction.

15. Device according to claim 14, **characterised by** a control circuit (63-67) having a device (63, 64) for measuring a variable which is characteristic for the capacitive components of the electrode current produced by the processing voltage, and having a device (67) for influencing the device (68; 78), which causes the advancement, in terms of an adjustment of the variable to a selected desired value

16. Device according to claim 15, **characterised in that** the control circuit has a peak detector (64) which is arranged for measuring the peak amplitude of one or the other polarity of the electrode current or for measuring the peak-peak amplitude of the electrode current.

17. Device according to one of claims 14 to 16, **characterised in that** the device (80-86) for adjusting the time mean of the processing voltage has a potentiostatic control system for holding the rest level, which is set between the deflections of the processing voltage, at a value at which the desired electrochemical reaction does not noticeably occur.

18. Device according to claim 17, **characterised in that** the potentiostatic control system (80-86) contains the following:

   a reference electrode (80) and a counter electrode (81), which are disposed in the region of the electrolyte;
   a first control circuit (82-85) with low-pass filter behaviour for bi-potentiostatic control of the electrochemical potential of the workpiece electrode (71) with respect to the reference electrode by means of the counter electrode to a desired value, at which the desired reaction does not noticeably occur at the workpiece electrode;
   a second control circuit (85, 86) with low-pass filter behaviour for bi-potentiostatically adjusting the electrochemical potential of the tool electrode (72) with respect to the reference electrode by means of the counter electrode to a desired value, at which side reactions at the tool electrode are sufficiently prevented.

**Revendications**

1. Procédé pour l'usinage d'une pièce par une réaction électrochimique définie,
   suivant lequel au moins la partie de la pièce contenant la zone à usiner est disposée en tant qu'électrode-pièce à l'intérieur d'un électrolyte à distance d'une électrode-outil et une tension électrique impulsionnelle ou alternative est appliquée entre ces deux électrodes,

**caractérisé par le fait**

**que** la moyenne temporelle de la tension appliquée présente une valeur située à l'intérieur de la plage de la caractéristique du système dans laquelle ne circule pas de courant de réaction notable ;

**que** les oscillations de la tension appliquée, mesurées par rapport à cette valeur moyenne, sont dimensionnées quant à leur amplitude, leur durée et leur intervalle de temps de telle manière que la double couche électrochimique subisse au moins sur la pièce et ici uniquement dans des zones locales qui ne sont pas éloignées de l'électrode-outil d'une distance supérieure à une distance maximale $d_{max}$ sélectionnée, périodiquement un changement de charge entre deux tensions de charge dont l'une au moins suffit à produire la réaction définie ;

**que** la géométrie de l'interstice entre les deux électrodes est dimensionnée de telle manière que seuls les points de la zone à usiner soient situés à l'intérieur de ladite distance maximale $d_{max}$.

2. Procédé suivant la revendication 1, **caractérisé par le fait que** la distance de chaque point de la zone à usiner par rapport à l'électrode-outil est située à l'intérieur d'une plage pour laquelle le courant d'électrode présente une composante capacitive nettement mesurable.

3. Procédé suivant la revendication 2, **caractérisé par le fait que** pendant l'usinage, la composante capacitive du courant d'électrode est utilisée comme grandeur réglée dans un circuit de régulation commandant la distance entre l'électrode-outil et la pièce.

4. Procédé suivant la revendication 1, **caractérisé par le fait**

**que** la tension électrique appliquée forme un train d'impulsions ayant une largeur $t_p$ et une tension maximale $U_p$ autorisant la réaction électrochimique définie, au-dessus d'un niveau de repos $U_o$,

et **que** les grandeurs $U_o$, $U_p$ et $t_p$, l'intervalle entre les impulsions et la géométrie de l'interstice entre l'électrode-outil et la pièce sont dimensionnés de telle manière que la distance d séparant chaque point de la zone à usiner de la surface de l'électrode-outil soit située à l'intérieur d'une plage pour laquelle le courant d'électrode présente des pointes de charge et recharge capacitives nettement mesurables.

5. Procédé suivant la revendication 1, **caractérisé par le fait**

**que** la tension électrique appliquée forme un train d'impulsions ayant une largeur $t_p$ et une tension maximale $U_p$ autorisant la réaction électrochimique définie, au-dessus d'un niveau de repos $U_o$,

et **que** les grandeurs $U_o$, $U_p$ et $t_p$ et la résistivité r de l'électrolyte sont dimensionnées de manière que :

$$U_0 + (U_p - U_0) \cdot \{1 - \exp [-t_p/(r \cdot c \cdot d_{max})]\} = U_{rkt}$$

où

c = capacité électrique par unité de surface des doubles couches en série,

$U_{rkt}$ = tension de seuil entre les électrodes à partir de laquelle a lieu une réaction électrochimique notable avec usinage de matériau.

6. Procédé suivant la revendication 1, **caractérisé par le fait**

**que** la tension électrique appliquée forme un train d'impulsions ayant une largeur $t_p$ et une tension maximale $U_p$ autorisant la réaction électrochimique définie, au-dessus d'un niveau de repos $U_o$ ;

**que** $U_p - U_o$ est moins de deux fois plus haut que la hauteur minimale à partir de laquelle se produit une réaction électrochimique notable avec usinage de matériau,

et **que** $t_p$ et la résistivité r de l'électrolyte sont dimensionnés de manière que

$$t_p \approx r \cdot c \cdot d_{max}$$

où

c = capacité électrique par unité de surface des doubles couches en série,

7. Procédé suivant l'une des revendications 4 à 6, **caractérisé par le fait que** les impulsions de tension sont essentiellement rectangulaires.

**8.** Procédé suivant l'une des revendications 4 à 7, **caractérisé par le fait que** pendant l'usinage, l'amplitude de pointe du courant de charge de la double couche est utilisée comme grandeur réglée dans un circuit de régulation commandant la distance entre l'électrode-outil et la pièce.

**9.** Procédé suivant l'une des revendications 1 à 3, **caractérisé par le fait que** la tension appliquée est d'allure sinusoïdale.

**10.** Procédé suivant l'une des revendications précédentes, **caractérisé par** le fait le niveau de repos s'établissant entre les oscillations de la tension appliquée est maintenu par régulation potentiostatique à une valeur pour laquelle la réaction définie ne se produit pas de façon notable.

**11.** Procédé suivant la revendication 10, **caractérisé par le fait qu'**aussi bien le potentiel électrochimique de l'électrode-pièce que le potentiel électrochimique de l'électrode-outil par rapport à une électrode de référence se trouvant dans l'électrolyte sont régulés, en passant par une contre-électrode se trouvant dans l'électrolyte, par un système de régulation à comportement passe-bas de façon bipotentiostatique à des valeurs de consigne pour lesquelles la réaction définie ne se produit pas de façon notable au niveau de l'électrode-pièce et des réactions secondaires sont suffisamment empêchées au niveau de l'électrode-outil.

**12.** Procédé suivant l'une des revendications précédentes, **caractérisé par le fait que** la pièce à usiner est en un matériau qui a été précipité à partir de l'électrolyte utilisé pour l'usinage, avant l'application de la tension produisant l'usinage.

**13.** Procédé suivant l'une des revendications précédentes, **caractérisé par** un dimensionnement tel de la géométrie de l'interstice entre les électrodes qu'une distance minimale de plus de 1 nm soit respectée entre la zone à usiner et l'électrode-outil.

**14.** Dispositif pour l'usinage d'une pièce par une réaction électrochimique définie, comprenant

un dispositif (68 ; 78) pour tenir au moins la partie d'une pièce contenant la zone à usiner, en tant qu'électrode-pièce (61; 71), à l'intérieur d'un électrolyte à une distance réglable d'une électrode-outil (62; 72) et pour produire un mouvement d'avance entre les deux électrodes dans le sens requis d'usinage à l'intérieur de l'électrolyte et un dispositif (88) pour appliquer une tension électrique impulsionnelle ou alternative entre les deux électrodes,

**caractérisé par**
une réalisation telle de l'électrode-outil (62; 72) qu'entre les deux électrodes puisse être établi un interstice avec une géométrie pour laquelle seuls les points de la zone à usiner soient situés à l'intérieur d'une distance maximale $d_{max}$ ;
un dispositif (80-86) pour régler la valeur moyenne temporelle de la tension d'usinage à une valeur située à l'intérieur de la plage de la caractéristique du système dans laquelle la réaction électrochimique définie ne se produit pas de façon notable ;
un dispositif (87) pour régler les oscillations de la tension appliquée, mesurées par rapport à cette valeur moyenne, quant à leur amplitude, leur durée et leur intervalle de temps de telle manière que la double couche électrochimique subisse au moins sur la pièce et ici uniquement dans des zones locales qui ne sont pas éloignées de l'électrode-outil d'une distance supérieure à la distance maximale $d_{max}$, périodiquement un changement de charge entre deux tensions de charge dont l'une au moins suffit à produire la réaction définie.

**15.** Dispositif suivant la revendication 14, **caractérisé par** un circuit de régulation (63-67) avec un dispositif (63, 64) pour mesurer une grandeur qui est caractéristique pour la composante capacitive du courant d'électrode produit par la tension d'usinage, et avec Un dispositif (67) pour agir sur le dispositif (68; 78) produisant le mouvement d'avance dans le sens d'une régulation de la grandeur mesurée sur une valeur de consigne sélectionnée.

**16.** Dispositif suivant la revendication 15, **caractérisé par le fait que** le circuit de régulation comprend un détecteur de pointe (64) qui est conçu pour mesurer l'amplitude de pointe d'une polarité ou de l'autre du courant d'électrode ou pour mesurer l'amplitude pointe-pointe du courant d'électrode.

**17.** Dispositif suivant l'une des revendications 14 à 16, **caractérisé par le fait que** le dispositif (80-86) pour régler la valeur moyenne temporelle de la tension d'usinage comprend un système de régulation potentiostatique pour maintenir le niveau de repos s'établissant entre les oscillations de la tension d'usinage à une valeur pour laquelle la réaction électrochimique définie ne se produit pas de façon notable.

**18.** Dispositif suivant la revendication 17, **caractérisé par le fait que** le système de régulation potentiostatique (80-86) comprend :

une électrode de référence (80) et une contre-électrode (81) disposées dans la zone de l'électrolyte ;
un premier circuit de régulation (82-85) à comportement passe-bas pour la régulation bipotentiostatique du potentiel électrochimique de l'électrode-pièce (71) par rapport à l'électrode de référence, en passant par la contre-électrode, à une valeur de consigne pour laquelle la réaction définie ne se produit pas de façon notable au niveau de l'électrode-pièce ;
un second circuit de régulation (82, 86) à comportement passe-bas pour la régulation bipotentiostatique du potentiel électrochimique de l'électrode-outil (72) par rapport à l'électrode de référence, en passant par la contre-électrode, à une valeur de consigne pour laquelle des réactions secondaires sont suffisamment empêchées au niveau de l'électrode-outil.

FIG. 1

(a)

$U$

$U_p$

$U_0$

$0$

$t_p$

$t$

(b)

$U_b$

$U_N$

$U_{reak}$

$U_W$

$U_0$

$0$

$t_p$

$t$

(c)

$I$

$I_N$

$I_W$

$0$

$t$

FIG. 2

FIG. 3

(a)

20 µm

(b)

20 µm

(c)

20 µm

FIG. 4

(a)

20 µm

(b)

20 µm

FIG. 5

FIG. 6

FIG. 7

(a) mit 0,1 M Elektrolyt

(b) mit 0,03 M Elektrolyt

FIG. 8

Auflösung = (Ø Loch - Ø Werkzeug) / 2

FIG. 9

FIG. 10

FIG. 11

(a) Pulsdauer 200 ns

(b) Pulsdauer 200 ns

(c) Pulsdauer 100 ns

(d) Pulsdauer (von links)
    50, 100, 100, 200 ns

FIG. 12

FIG. 13

Pulsdauer 400 ns

FIG. 14

FIG. 15

FIG. 16

FIG. 17